(19) Europäisches Patentamt
European Patent Office
Office européen des brevets

(11) Veröffentlichungsnummer: **0 376 032 B1**

# (12) EUROPÄISCHE PATENTSCHRIFT

(45) Veröffentlichungstag der Patentschrift: **23.11.94**

(51) Int. Cl.⁵: **C09B 56/04**, C09B 35/215, G02B 1/08

(21) Anmeldenummer: **89122778.7**

(22) Anmeldetag: **09.12.89**

Die Akte enthält technische Angaben, die nach dem Eingang der Anmeldung eingereicht wurden und die nicht in dieser Patentschrift enthalten sind.

## (54) Stilbenfarbstoffe und lichtpolarisierende Filme oder Folien enthaltend Stilbenfarbstoffe.

(30) Priorität: **23.12.88 DE 3843414**
**01.07.89 DE 3921678**

(43) Veröffentlichungstag der Anmeldung:
**04.07.90 Patentblatt 90/27**

(45) Bekanntmachung des Hinweises auf die Patenterteilung:
**23.11.94 Patentblatt 94/47**

(84) Benannte Vertragsstaaten:
**CH DE FR GB IT LI NL SE**

(56) Entgegenhaltungen:
**EP-A- 0 035 152**
**DE-A- 3 512 836**
**FR-A- 1 161 300**
**US-A- 2 821 550**
**US-A- 4 514 559**

(73) Patentinhaber: **BAYER AG**
**D-51368 Leverkusen (DE)**

(72) Erfinder: **Claussen, Uwe, Dr.**
**Am Wasserturm 15b**
**D-5090 Leverkusen 3 (Opladen) (DE)**
Erfinder: **Kröck, Friedrich W., Dr.**
**Ackerstrasse 45**
**D-5068 Odenthal (DE)**

EP 0 376 032 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft Stilbenfarbstoffe und lichtpolarisierende Filme oder Folien, enthaltend Stilbenfarbstoffe.

Filme auf der Basis von Polyvinylalkohol (PVA), die Iod oder dichroitische Farbstoffe als polarisierende Agentien enthalten, sind bekannt.

Technische Verwendung haben bislang ganz überwiegend die iodhaltigen Polarisatoren gefunden, die beispielsweise in den passiven Flüssigkristall-Displays zur Sichtbarmachung der Information eingesetzt werden. Bei Abwesenheit von Feuchtigkeit kennzeichnen diese eine ausgezeichnete Lichtechtheit und hervorragende dichroitische Eigenschaften im langwelligen Bereich des sichtbaren Spektrums. Das wirksame Agens dieser Filme ist der Iod-PVA-Komplex (M. M. Zwick. J. Appl. Polym. Sci. 9, 2393-2424 (1965)), der das Tageslicht zwar breitbandig, aber nicht vollständig absorbiert. Im kurzwelligen Bereich ist ein "Loch", d.h. ein Bereich verminderter Extinktion, weswegen die Folien eine blaue Eigenfarbe zeigen.

Dies hat nachteilige Folgen, wenn man weißes Licht erzeugen will. Das unpolarisiert durchgelassene Licht vermindert den Dichroismus und damit die Polarisationsleistung in diesem Bereich. Um ihn wieder anzuheben, ist man gezwungen, die Konzentration an Iod-Komplex zu erhöhen. Diese Korrektur im kurzwelligen Bereich zieht aber eine übermäßige Extinktion im langwelligen Bereich nach sich. Die Folge ist eine deutliche Verminderung des durchgelassenen Lichts in der Durchgangsstellung, verbunden mit einer Minderung der Helligkeit der Anzeige, die mit dieser Folie bestückt wird. Um zu vertretbaren Helligkeiten zu gelangen, muß man Kompromisse schließen.

Eine wichtige kritische Größe eines Displays ist die Ablesbarkeit bei verschiedenen Beleuchtungsverhältnissen; sie wird üblicherweise als "Perceived contrast ratio" (PCR = $T_{\perp}/T_{\parallel}$) angegeben; dieses soll möglichst groß sein. Aus diesem folgt, daß die Transmission einerseits in der Sperrstellung ($T_{\parallel}$) so klein wie möglich (Ablesbarkeit bei Dunkelheit), andererseits in der Durchgangsstellung ($T_{\perp}$) so groß wie möglich (Ablesbarkeit bei Helligkeit) gemacht werden muß. Dies erfordert eine ganz gleichmäßige Polarisationsleistung des Filters über den gesamten spektralen Bereich, welche mit der Iodfolie prinzipiell nicht erreicht werden kann.

Es hat nicht an Versuchen gefehlt, Iod durch Farbstofftripel dichroitischer Farbstoffe zu ersetzen, um ein Neutralgrau mit gleichmäßigem Dichroismus zu erzeugen.

Allerdings bedarf es hierzu einer Gamme sehr leistungsfähiger Farbstoffe. Sie müssen neben guten Licht- und Wetterechtheiten eine hohe Extinktion und einen hohen Dichroismus in der Matrix haben; außerdem dürfen sie keine Nebendichten mit geringerem Dichroismus besitzen. So sind vorzugsweise Polyazofarbstoffe vorgeschlagen worden (JA 59-145255, JA 60-156759, JA 60-168743). Obgleich aber der Dichroismus bei den Farbstoffen eine verbreitete Eigenschaft ist (vgl. W. Hanle, H. Scherer, Zeitschr. Naturforsch. 6a, 437-439 (1951)) gelang es bisher nicht, die spektralen Eigenschaften der Iodfolie zu erreichen oder zu übertreffen. Dies ist einmal dem Fehlen guter Blaunuancen, zum anderen der Forderung nach dem hohen Dichroismus des Systems Farbstoff/Matrix zuzuschreiben.

US-A-4 514 559 beschreibt von der 4-Amino-4'-nitro-stilben-2,2'-disulfonsäure abgeleitete Verbindungen als dichroitische Farbstoffe. Mit diesen Farbstoffen hergestellte lichtpolarisierende Folien erreichen jedoch ebenfalls nicht die dichroitischen Eigenschaften der Iodfolien.

DE-A-3 512 836 und FR-A-1 161-300 beschreiben Farbstoffe, die von der 4-Amino-4'-nitro-stilben-2-sulfonsäure abgeleitet sind. Sie werden zur Herstellung von wäßriger Tinte und als direktziehende Farbstoffe verwendet.

Es wurde nun überraschenderweise gefunden, daß bestimmte neue Stilbenfarbstoffe hervorragende dichroitische Eigenschaften aufweisen und sich sehr gut zur Herstellung von lichtpolarisierenden Filmen oder Folien eignen.

(Eine im folgenden einmal gegebene Definition eines Restes oder Index wird im weiteren Text beibehalten).

Die Erfindung betrifft somit in einem Aspekt Farbstoffe, die in Form ihrer freien Säure der Formel

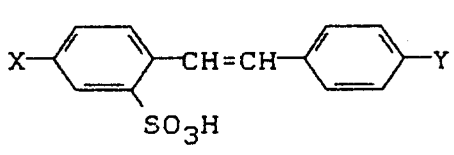

I

entsprechen, in der

X, Y  -N=N-R, $-CF_3$, $-CONH_2$, $-CONHR^1$, $-CONR^1R^2$, -COOH, $-COOR^1$, -CN, $-NO_2$, $-NH_2$, $-NHR^1$, $-NR^1R^2$, -OH, $-NHCOR^1$ oder $-O-CO-R^1$

$R^1$, $R^2$  gegebenenfalls durch O und/oder S unterbrochenes Alkyl, Cycloalkyl, Aryl oder Aralkyl bedeuten,

mit der Maßgabe, daß mindestens einer der Rest X, Y für -N=N-R steht, wobei

R  einem aromatischen Rest der Formel

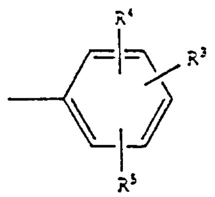

oder

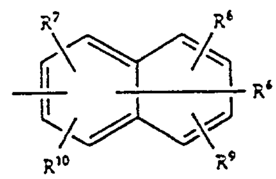

entspricht, wobei

$R^3$  H, -OH, $-OR^1$, $-NH_2$, $-NHR^1$, $-NR^1R^2$, $-NH-COR^1$, $-O-COR^1$, $-N=N-R^{11}$,

$R^4$, $R^5$, $R^7$, $R^8$, $R^9$, $R^{10}$  H, Halogen, -OH, $-OR^1$, $-NH_2$, $-NHR^1$, $-NR^1R^2$, $R^1$, $-SO_3H$, $-SO_2-NH_2$, $-SO_2-NHR^1$, $-SO_2-NR^1R^2$, $-O-CO-R^1$, $-NHCOR^1$

$R^6$  H, $-N=N-R^{11}$ bedeuten, wobei

$R^{11}$  einem aromatischen Rest der Formel

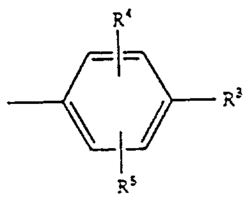

,

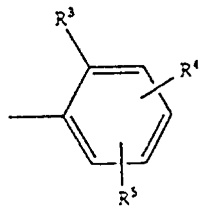

,

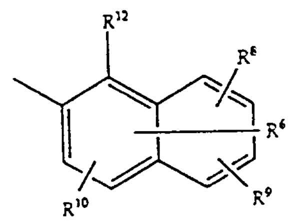

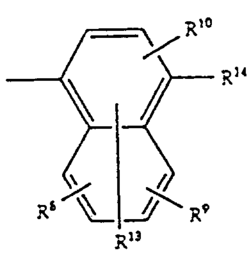

,

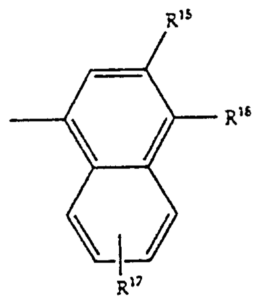

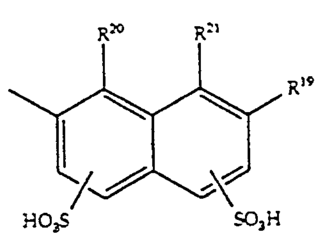

,

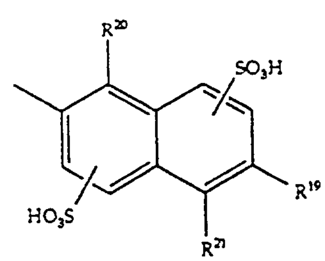

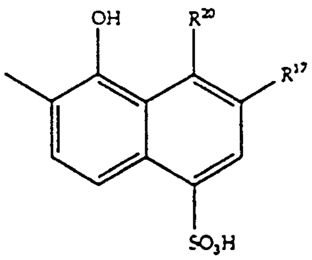

oder

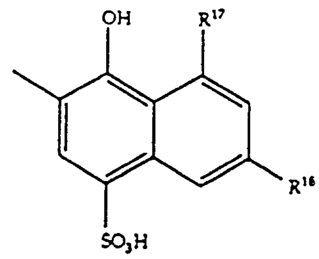

entspricht, wobei

$R^{12}$ = -OH, $-NH_2$

$R^{13}$ = H, wenn $R^{14}$ = $-N=N-R^{11}$ oder H, $-N=N-R^{11}$, wenn $R^{14}$ = -OH, $-NH_2$,

$R^{14}$ = -OH, $-NH_2$, $-N=N-R^{11}$,

$R^{15}$ = H, -OH, $-OR^1$, $-O-COR^1$, $-NH_2$, $-NHR^1$, $-NR^1R^2$, $-NHCOR^1$, $-SO_3H$,

$R^{17}$ = H oder $-SO_3H$,

$R^{18}$ = H, -OH, $-NH_2$, $-NHCOR^1$, $-NHR^1$, $-N=N-R^{11}$, $-SO_3H$,

$R^{19}$ = H oder $-N=N-R^{11}$,

$R^{20}$, $R^{21}$ = -OH, $-NH_2$, $-O-CO-R^1$, $-NHCOR^1$ bedeuten,

wobei weiterhin die für $R^1$ und $R^2$ genannten Reste im Fall von $R^1/R^2$ = Alkyl oder Cycloalkyl durch Halogen, -OH, -CN und $C_1$-$C_4$-Alkoxy und im Fall von $R^1/R^2$ = Aryl oder Aralkyl durch Halogen, -OH, $C_1$-$C_4$-Alkoxy, $C_1$-$C_4$-Alkyl, $-CF_3$, $-NO_2$ und -CN substituiert sein können, wobei der Farbstoff der in Form seiner freien Säure der Formel I mit

X =

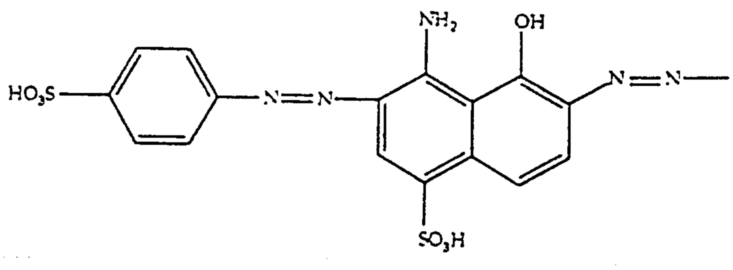

und

Y =

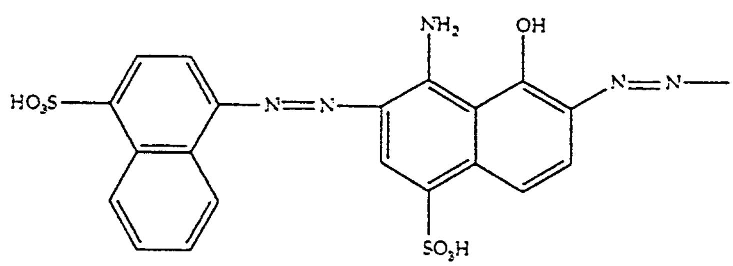

entspricht,
ausgenommen ist und die Azofarbstoffe höchstens acht Azobrücken enthalten.

Bevorzugt leiten sich R und $R^{11}$ von der (substituierten) I-Säure ab:

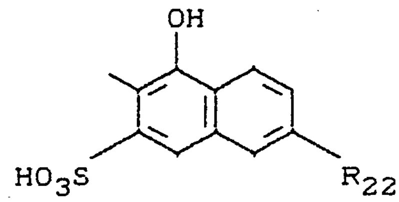

$R_{22}$ = -NH-$R^1$, -NH-CO-$R^1$, -N=N-$R^{11}$

Beispiele für Reste R und $R^{11}$ sind:

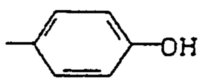, 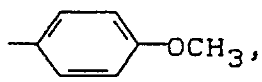, 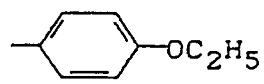,

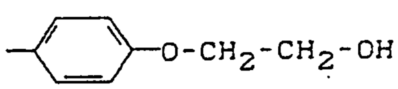, 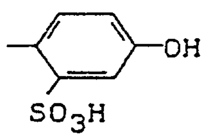, 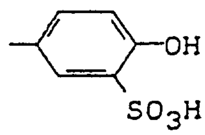,

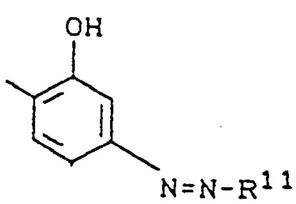, 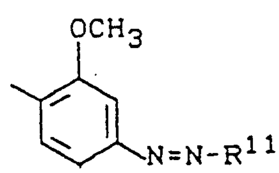,

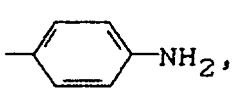, 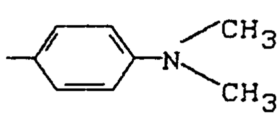, 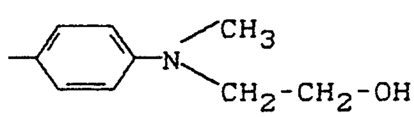,

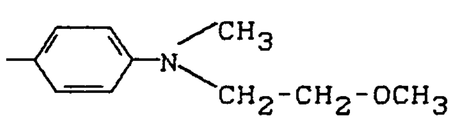, 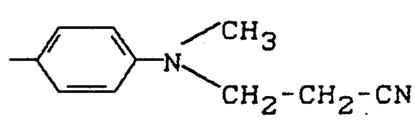,

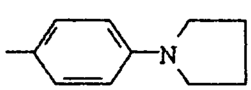, 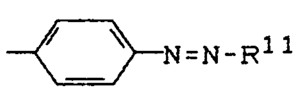, 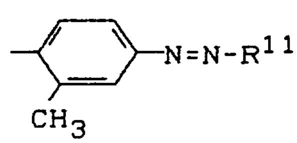

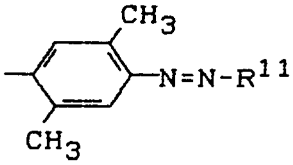 , 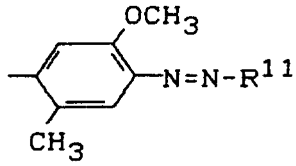 , 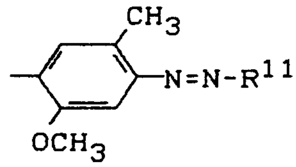 ,

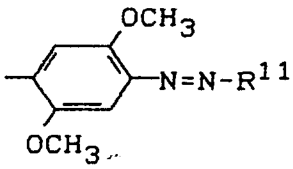 , 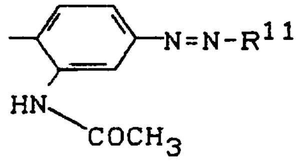 , 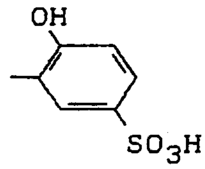 ,

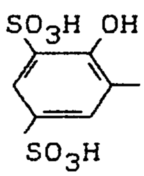 , 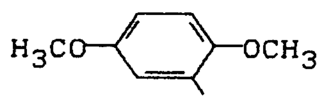 ,

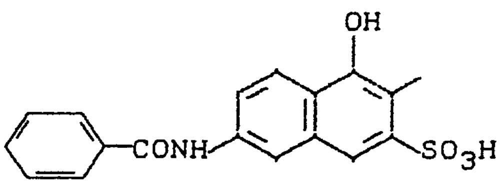 , 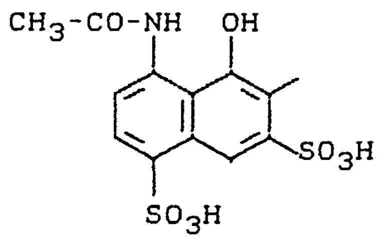 ,

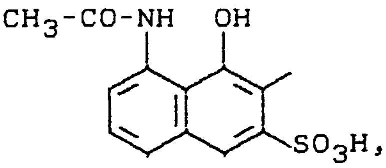,
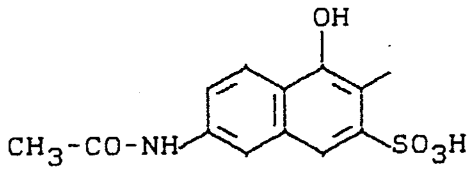,

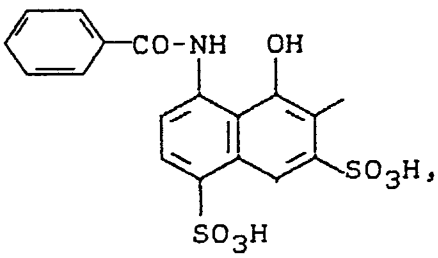,
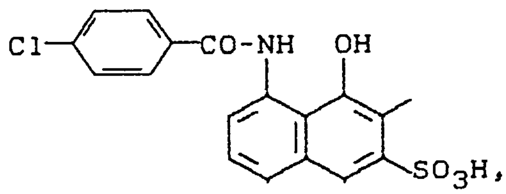,

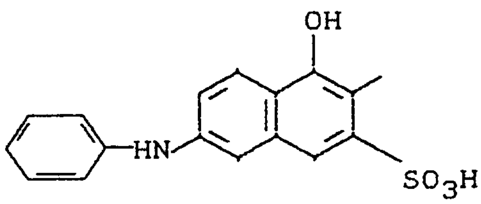,
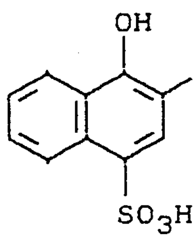,

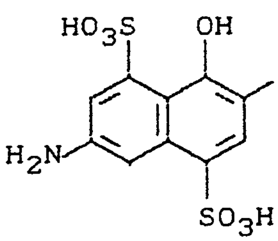,
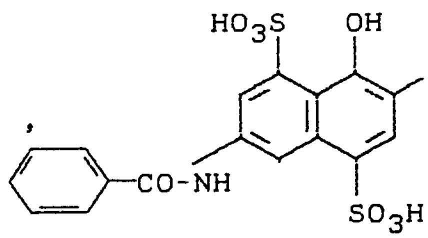

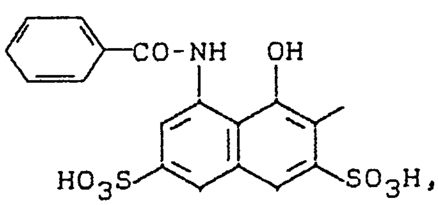,
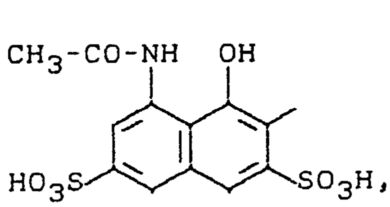,

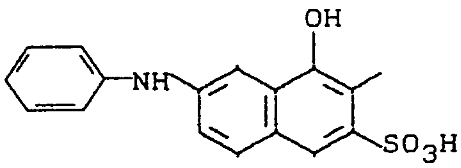 , 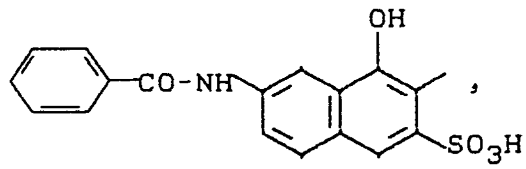 ,

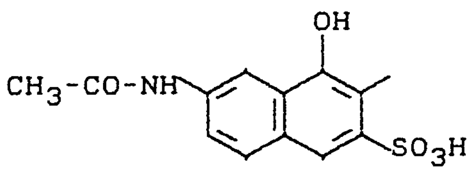 , 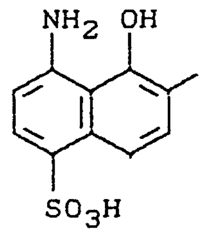 ,

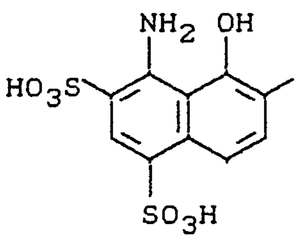 , 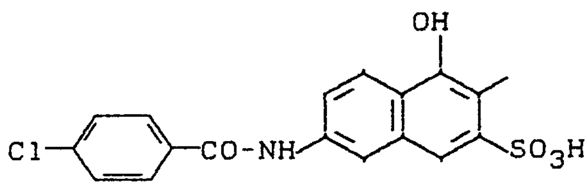 ,

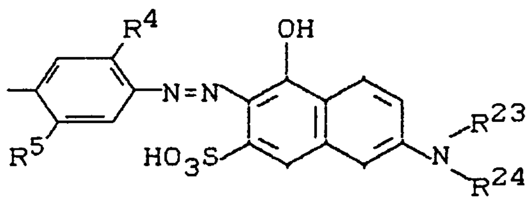 ,

$R^{23}$, $R^{24}$ = H, $C_1$-$C_4$-Alkyl (Methyl), $C_1$-$C_4$-Alkylcarbonyl, bei denen das Alkyl durch -OH, -OAlk, -CN substituiert sein kann (2-Hydroxyethyl, 2-Cyanethyl), Phenyl, Benzyl, Benzoyl, die durch $-NO_2$, -OH, $C_1$-$C_4$-Alkyl (Methyl), Halogen, $-SO_3H$, -COOH substituiert sein können,

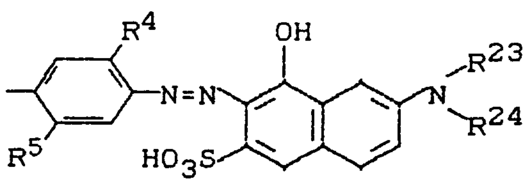 ,

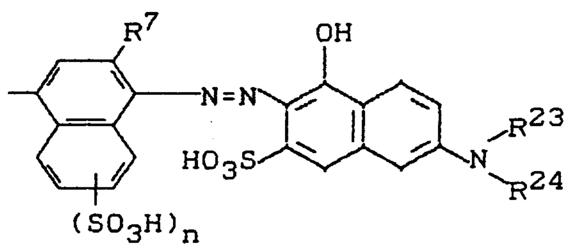 ,

n = 0, 1, 2

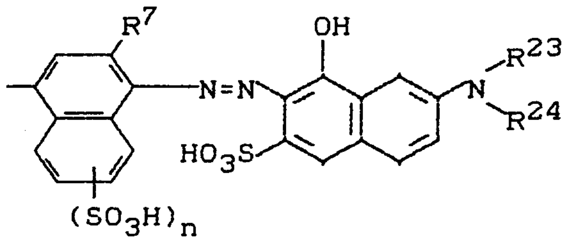

,

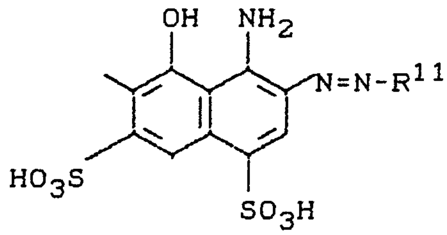

,

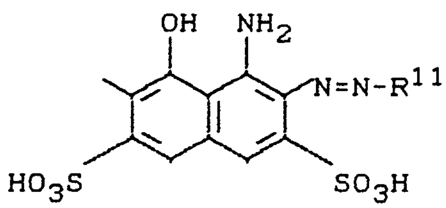

,

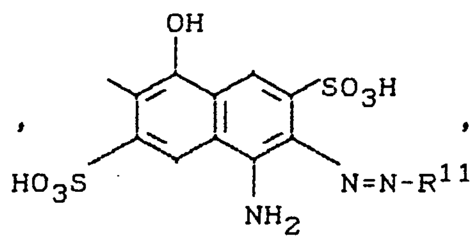

,

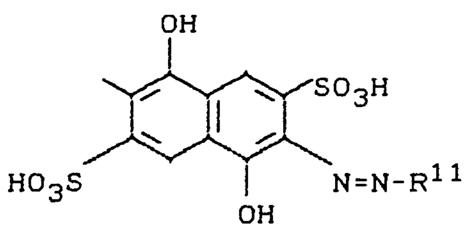

,

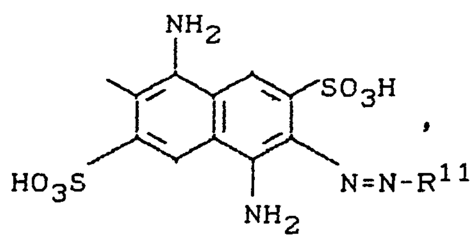

,

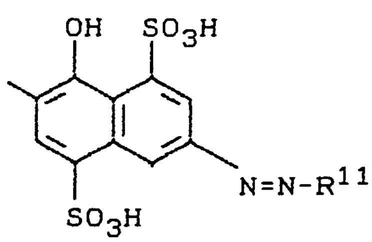

,

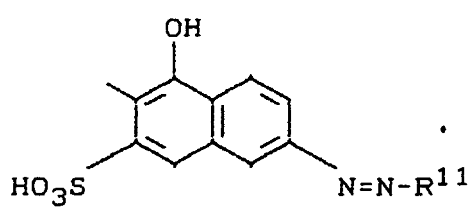

.

Der Rest R enthält vorzugsweise 0, 1, 2 oder 3 Azogruppen.

Bevorzugt sind Verbindungen der Formel I, bei denen X = Y = -N = N-R ist.

Alkyl ($R^1$, $R^2$) steht bevorzugt für $C_1$-$C_6$-Alkyl (Methyl, Ethyl), Cycloalkyl ($R^1$, $R^2$) steht bevorzugt für $C_3$-$C_7$-Cycloalkyl (Cyclopentyl, Cyclohexyl).

Aryl ($R^1$, $R^2$) steht bevorzugt für Phenyl und Naphthyl. Aralkyl ($R^1$, $R^2$) steht bevorzugt für Phenyl-$C_1$-$C_4$-alkyl (Benzyl, Phenethyl).

Als Substituenten für die Alkyl- und Cycloalkylreste ($R^1$, $R^2$) kommen z.B. Halogen (Cl, Br, F), -OH, -CN, $C_1$-$C_4$-Alkoxy u.a. in Betracht.

Als Substituenten für die Aryl- und Aralkylreste ($R^1$, $R^2$) kommen z.B. Halogen (Cl, Br, F), -OH, $C_1$-$C_4$-Alkoxy (Methoxy), $C_1$-$C_4$-Alkyl (Methyl), $CF_3$, $NO_2$, CN in Betracht.

Die Herstellung der Verbindungen I kann in Analogie zu literaturbekannten Verfahren erfolgen. Als Ausgangsprodukte können die Verbindungen II bis V dienen, deren Herstellung im folgenden skizziert ist.

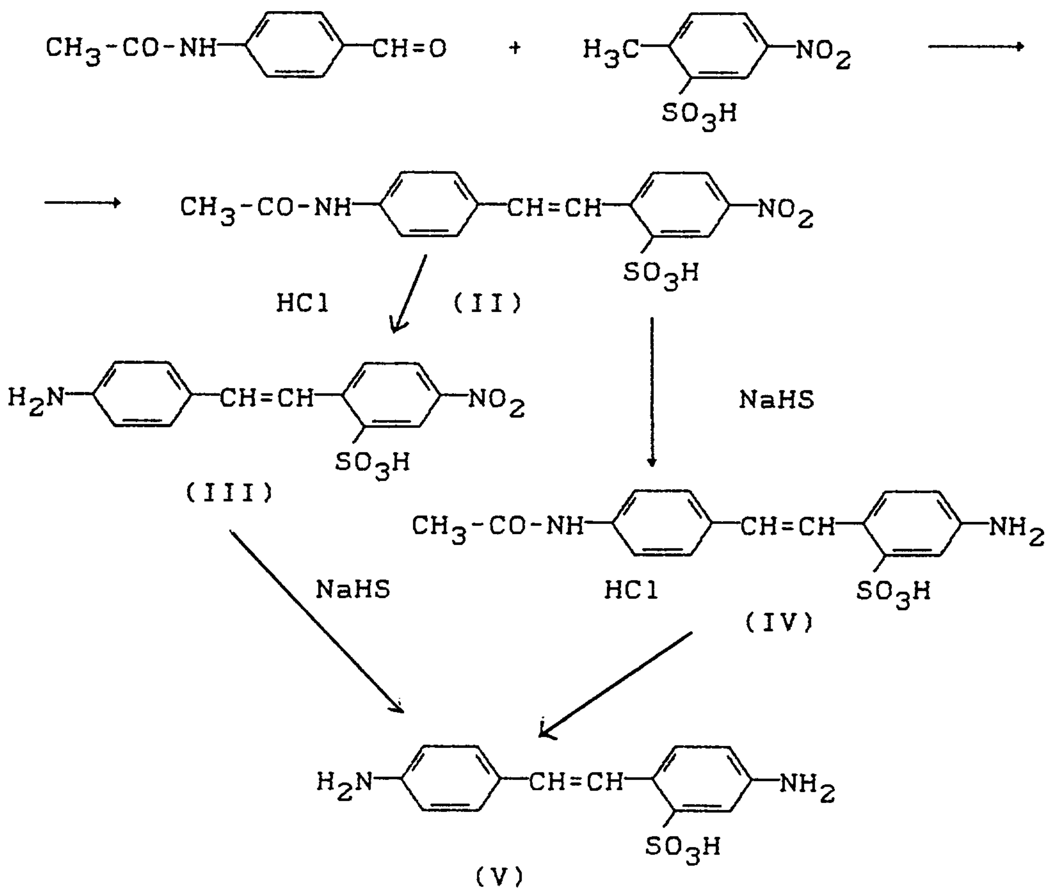


Weitere Möglichkeiten der Synthese dieser und ähnlicher geeigneter Zwischenprodukte für die Farbstoff-Synthese findet man in DOS 3 805 513, siehe insbesondere Beispiel 2 und Beispiel 2ter.

Die Farbstoffsynthese aus diesen Verbindungen erfolgt auf die übliche Weise durch Diazotierung und Kupplung auf geeignete Kupplungskomponenten.

- Die Verbindung III wird diazotiert und auf Komponenten wie Phenole, Aniline (Aminohydrochinondimethylether), Benzoyl-I-Säure, Acetyl-Gammasäure, N-(4-Sulfophenyl)pyrazolon-(5) etc. gekuppelt. Die phenolischen OH-Gruppen der Produkte aus den Phenolkupplungen können anschließend durch Alkylierung verschlossen werden.

  Die freien Aminogruppen der Produkte aus den Anilinkupplungen können erneut diazotiert und wiederum auf Phenole, Aniline, Benzoyl-I-Säure, Acetyl-Gammasäure etc. gekuppelt werden. Schließlich läßt sich die Nitrogruppe am Farbstoff reduzieren und man kann die freie Aminogruppe auf die genannten Kupplungskomponenten kuppeln, wodurch sich "unsymmetrische" Verbindungen herstellen lassen. Die freien Aminogruppen aus der Anilinkupplung oder der Nitrogruppenreduktion können auch z.B. mit Benzoylchlorid acyliert werden.
- Die Verbindung (IV) wird diazotiert und auf Komponenten wie Phenole, Aniline (Aminohydrochinondimethylether), Benzoyl-I-Säure, Acetyl-Gammasäure Acetyl-H-Säure, N-(4'-Sulfo-diphenylyl)-pyrazolon-(5) etc. gekuppelt. Die phenolischen OH-Gruppen der Produkte aus den Phenolkupplungen können anschließend durch Alkylierung verschlossen werden. Die freien Aminogruppen der Produkte aus den Anilinkupplungen können erneut diazotiert und wiederum auf Phenole, Aniline, Benzoyl-I-Säure, Acetyl-Gammasäure etc. gekuppelt werden. Schließlich läßt sich die Acetylaminogruppe am Farbstoff spalten und man kann die freie Aminogruppe auf die genannten Kupplungskomponenten kuppeln; dadurch kann man auch die zu den aus (III) hergestellten, bezüglich der Position der Sulfonsäuregruppen isomeren Derivate herstellen. Die freien Aminogruppen aus der Anilinkupplung oder der Spaltung der Acetylaminogruppe können auch z.B. mit Benzoylchlorid acyliert werden.

- Die Verbindung (V) läßt sich tetrazotieren und dann auf die oben genannten Kupplungskomponenten kuppeln. Die phenolischen OH-Gruppen der Produkte aus den Phenolkupplungen können anschließend durch Alkylierung verschlossen werden. Die freien Aminogruppen der Produkte aus den Anilinkupplungen können erneut diazotiert und wiederum auf Phenole, Aniline, Benzoyl-I-Säure, Acetyl-Gammasäure etc. gekuppelt werden, sie können auch acyliert werden, beispielsweise mit Benzoylchlorid.
- Die Aminogruppen der Monoaminoverbindungen III und IV lassen sich nach Sandmeyer in die entsprechenden Halogen-, CN-, OH-Verbindungen etc. oder z.B. in diverse Derivate (Triazole, Pyrazole etc.) überführen. Nach Reduktion der Nitrogruppe bzw. Hydrolyse der Acetylaminogruppe lassen sich die erhaltenen Monoaminoverbindungen zu Azofarbstoffen kuppeln.
- Die Diaminoverbindung V kann man mit Azofarbstoffen mit einer Nitrogruppe, vorzugsweise in 4-Stellung zu einer Azogruppe, unter Bildung von Azoxybrücken kondensieren, die sich anschließend durch Behandlung z.B. mit Glucose zu Azobrücken reduzieren lassen. Ebenso läßt sich die 4,4'-Dinitro-stilben-2-sulfonsäure (Herstellung s. DOS 3 805 513, Bsp. 2) mit Azofarbstoffen mit einer Aminogruppe, vorzugsweise in 4-Stellung zu einer Azogruppe, unter Bildung von Azoxybrücken kondensieren, die sich ebenso zu Azobrücken reduzieren lassen.

In einem weiteren Aspekt betrifft die Erfindung lichtpolarisierende Filme (Folien), die ein organisches Polymer und eine oder mehrere Verbindungen der Formel I enthalten.

Bei dem organischen Polymer handelt es sich vorzugsweise um ein transparente Filme bildendes, orientiertes Polymer, das mit saure Gruppen enthaltenden Farbstoffen verträglich ist. Beispiele für ein solches Polymer sind: flüssigkristalline Polymere z.B. auf Polyesterbasis, Polyamide, Cellulose(acetat), Vinylalkoholhomo- und - copolymere sowie Vinylacetathomo- und -copolymere, wobei als Comonomere z.B. Ethylen, Propylen, Crotonsäure, (Meth)Acrylsäure, Maleinsäure vorliegen können. Bevorzugt eingesetzt werden Polyvinylalkohole, die durch vollständige oder teilweise Verseifung von Polyvinylacetat hergestellt worden sind, insbesondere Typen, die in 4%iger wäßriger Lösung eine Viskosität > 4 mPa.sec$^2$, vorzugsweise 20 bis 70 mPa.sec$^2$ bei 20 °C und einen Verseifungsgrad > 80 Mol.-%, vorzugsweise 85 bis 100 Mol.-%, aufweisen. Die Filme haben vorzugsweise eine Dicke von 10 bis 150 $\mu$. Vorzugsweise werden solche Folien eingesetzt, die bei Raumtemperatur oder erhöhter Temperatur, vorzugsweise bei 80 bis 160 °C, um 200 bis 1000 % verstreckt worden sind.

Die Filme haben vorzugsweise eine Dicke von 10 bis 150 $\mu$. Die Filme enthalten vorzugsweise 0,01 bis 10 Gew.-%, besonders bevorzugt 0,5 bis 6 Gew.-%, bezogen auf das Filmgewicht, Farbstoff bzw. Farbstoffmischung. Die Einfärbung der Filme geschieht auf übliche Weise, z.B. durch Einfärben des (in Wasser) gelösten Polymeren. Es empfiehlt sich, die Farbstoffe oder Farbstoffsalze vor ihrem Einsatz, z.B. durch Umkristallisieren, Extraktion und/oder Dialyse, von Fremdsalzen zu befreien.

Der Dichroismus des Systems läßt sich durch Zusätze mehrwertiger Alkohole, wie Glykol, Glyzerin, Diglykol, Trimetholethan, Trimethylolpropan, Pentaerythrit, Sorbit, deren Ether wie Glykolmonomethylether, Glykolmonoethylether, Glykoldimethylether, Diglykoldiethylether, Hydroxyaminen wie Propanolamin oder Amiden, wie DMF, N-Methylpyrrolidon, Pyrrolidon, $\epsilon$-Caprolactam, zur Gießlösung beträchtlich verstärken. Die Additive können allein oder vorteilhafter in Mischungen eingesetzt werden, wobei als Mischungsbestandteile auch niedere einwertige Alkohole, z.B. Methanol, Ethanol, Propanol, i-Propanol, auftreten können. Die Additive werden der Gießlösung in Mengen von 1-50 Gew.-%, bezogen auf die Gießlösung, zugesetzt.

Aus der Lösung wird der Film in an sich bekannter Weise durch Gießen hergestellt.

Gewünschtenfalls können die farbstoffhaltigen Filme auch einer Nachbehandlung, z.B. mit wäßriger Borsäurelösung, zwecks Verbesserung der Lichtdurchlässigkeit oder des Polarisationskoeffizienten unterworfen werdend Die Bedingungen, unter denen diese Nachbehandlung durchgeführt wird, können abhängig vom Filmmaterial und Farbstoff schwanken. Vorzugsweise arbeitet man mit einer 1-15 gew.-%igen, besonders bevorzugt 5-10 gew.-%igen, Borsäurelösung bei 30-80 °C, besonders bevorzugt 50-80 °C.

Vorzugsweise setzt man der Borsäurelösung Tenside und gegebenenfalls anorganische Salze zu. Die Tenside können nicht-ionisch, kationisch oder anionisch sein; bevorzugt sind sie nicht-ionisch. Beispiele für nicht-ionische Tenside sind: Additionsprodukte von Ethylenoxid an höhere Alkohole oder Additionsprodukte von Ethylenoxid an Nonylphenol. Vorzugsweise verwendet man, bezogen auf Wasser, 0,005-0,5 Gew.-%, besonders bevorzugt 0,02-0,2 Gew.-% Tensid.

Als anorganische Salze kommen vorzugsweise Natriumsulfat und weiterhin Kaliumsulfat, Natriumchlorid, Kaliumchlorid, Natriumnitrat, Kaliumnitrat in Betracht. Bezogen auf Wasser, werden vorzugsweise 0,1-5 Gew.-%, besonders bevorzugt 0,3-3 Gew.-%, anorganische Salze eingesetzt. Gewünschtenfalls kann noch eine Fixierungsbehandlung mit einer wäßrigen Lösung einem hochmolekularen kationischen Verbindung vorgenommen werden.

Die lichtpolarisierenden Filme oder Folien können in an sich bekannter Weise mit anderen Materialien compoundiert oder laminiert werden. Als Schutzüberzug eignen sich z.B. Folien aus einem Tetrafluorethylen-Hexafluorethylen-Copolymer oder einem anderen Fluorkohlenwasserstoff-Harz, einem Polyester-, Polyolefin- oder Polyamid-Harz, einem Polycarbonat oder Celluloseester, vorzugsweise -(tri-acetat, -propionat, -butyrat).

Außer ihrer Verwendung in lichtpolarisierenden Filmen können die Farbstoffe der Formel (I) allein oder in Mischungen zum Sichtbarmachen geordneter Strukturen in der Analytik von Polymeren und in biolgischem Material eingesetzt werden.

Beispiel 1

a) Farbstoff-Synthese:

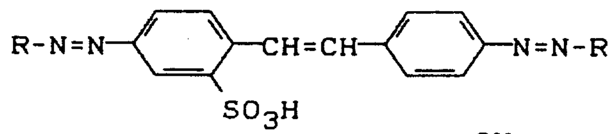

R =

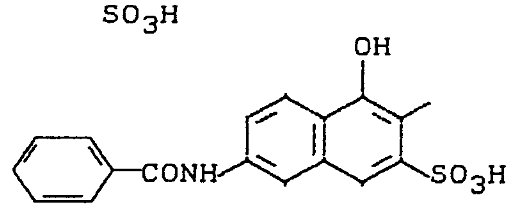

29 g (0,1 M) 4,4'-Diamino-stilben-2-sulfonsäure (hergestellt nach DOS 3 805 513, Beispiel 3) werden in 1 l Wasser suspendiert. Dazu gibt man 83 ml konz. Salzsäure und tropft bei Raumtemperatur langsam 51 ml (0,22 M) Natriumnitritlösung (als ca. 30 %ige Lösung) ein. Die Suspension wird über Nacht gerührt. Danach soll ein Nitrit-Überschuß nachweisbar sein, der durch Zugabe von Amidosulfonsäurelösung zerstört wird. Diese Tetrazoniumsalz-Lösung wird bei Raumtemperatur unter pH-Kontrolle langsam zu einer Lösung von 69 g (0,2 M) 1-Hydroxy-6-benzoylamino-naphthalin-3-sulfonsäure in 0,5 l Wasser eingetropft, wobei der pH-Wert durch Zutropfen von 10-proz. Natronlauge zwischen 6,5 und 7 gehalten wird. Nach Rühren über Nacht wird der ausgefallene Farbstoff abgesaugt und mehrfach mit kleinen Portionen Wasser gewaschen. Dann wird der Farbstoff in Wasser gelöst einer Dialyse unterworfen, um Salze abzutrennen; anschließend wird die erhaltene Farbstoff-Lösung eingedampft und der Rückstand getrocknet. Ausbeute: 95 g.

b) Herstellung der Folie

In 190 ml Wasser löst man durch 2-stündiges Erhitzen auf 90 °C unter Rühren 9,9 g ®MOWIOL 28-99 (verseiftes Polyvinylacetat; Verseifungsgrad 99,4 ± 0,4 Mol-%; Viskosität der 4 %igen wäßrigen Lösung bei 20 °C:28 ± 2,0 mPa.sec$^2$; Herst.: Hoechst AG) und 0,1 g Farbstoff des Beispiels 1a. Von der so erhaltenen, bezogen auf das Polymer 1 %igen Farbstofflösung werden 92,5 g mit 5 g Methanol und 2,5 g Glycerin versetzt. Aus dieser Lösung werden mit Hilfe eines Rakels 500 µ dicke Schichten auf eine reine Glasplatte gezogen und die so erhaltenen Schichten auf einer exakt waagrecht ausgerichteten Unterlage an der Luft bei Raumtemperatur getrocknet. Die erhaltenen, trockenen Folien werden von der Glasplatte abgezogen; sie haben eine violette Farbe und sind ca. 40-50 µ dick.

c) Reckung der Folien

Zur Erzeugung der dichroitischen Eigenschaften werden die Folien gereckt. Dazu werden sie in einem Trockenschrank 15 Min. bei 130 °C temperiert und dann mit einer Geschwindigkeit von ca. 10 cm/Min. auf ca. 700 % ihrer ursprünglichen Länge verstreckt. Die gereckten Folien haben im Absorptionsmaximum (570 nm) mit polarisiertem Licht gemessen ein dichroitisches Verhältnis von ca. 43; Reflexionsverluste wurden bei der Messung nicht berücksichtigt.

d) Folienherstellung auf der Gießmaschine

0,2 g Farbstoff des Beispiels 1a löst man in 100 g Wasser heiß auf, Dazu gibt man 10 g Glycerin und trägt in die erkaltete Lösung 19.8 g ®MOWIOL 28-99 unter Rühren ein. Nach 1 Stunde Rühren bei Raumtemperatur erhitzt man auf 90 °C und rührt so lange bei dieser Temperatur, bis nach ca. 3 Std. eine homogene Lösung entstanden ist. Bei 50 °C rührt man dann 5 g Methanol ein. Die warme Lösung wird durch eine Filterpresse unter Aufpressen von Luft filtriert und dann durch Evakuieren entgast. Die

Gießlösung ist bei 30 ° C gießfähig und haltbar.

Zur Erzeugung einer Folie wird die Gießlösung mit einem 250 µ-Rakel auf die auf ca. 50 ° C vorgewärmte Gießtrommel (Trommeldurchmesser 25 cm, Umlaufgeschwindigkeit ca. 7,5 min/Umdrehung) kontinuierlich aufgetragen. Die Schicht wird durch Überleiten von erhitzter Luft getrocknet und die verfestigte Folie von der Trommel kontinuierlich abgezogen und nachgetrocknet. Die erhaltene Folie ist etwa 40 µ dick. Sie wird wie zuvor unter c) beschrieben gereckt, wobei man ähnliche Ergebnisse erhält.

e) Ganz entsprechend wie in Beispiel 1a erhält man durch Verwendung der angegebenen Kupplungskomponenten (der Strich — bedeutet jeweils die Kupplungsstelle) analoge Farbstoffe, die nach 1b in Folien eingearbeitet werden. Durch Recken nach 1c erhält man dichroitische Folien.

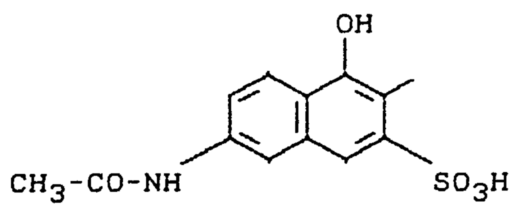

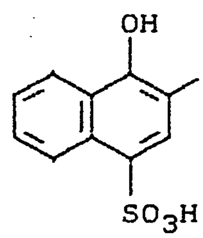

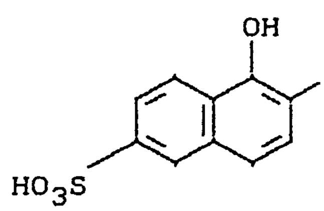

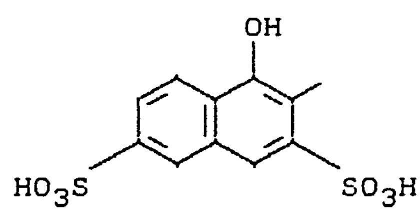

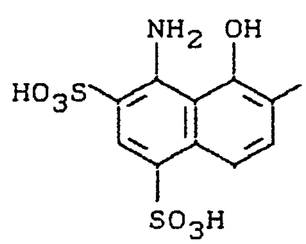

Weitere Farbstoffe wurden analog Beispiel 1a aus den folgenden Kupplungskomponenten hergestellt:

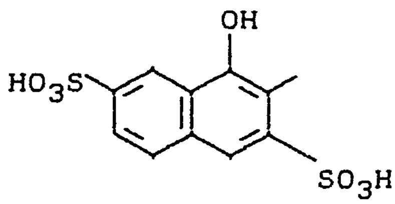

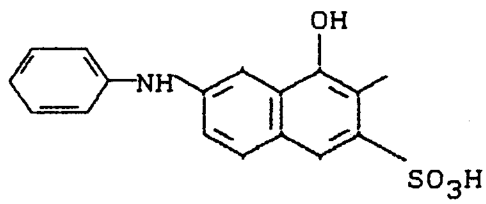

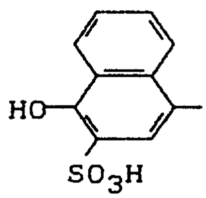

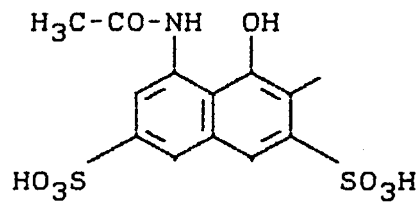

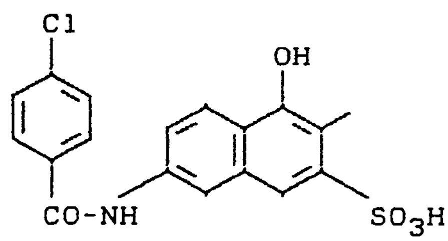

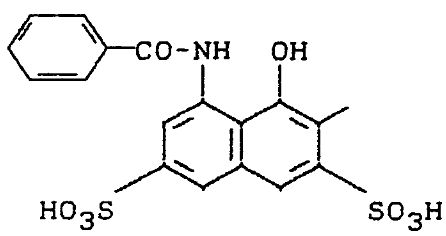

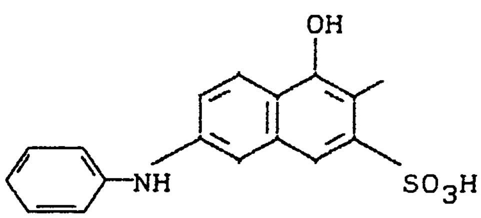

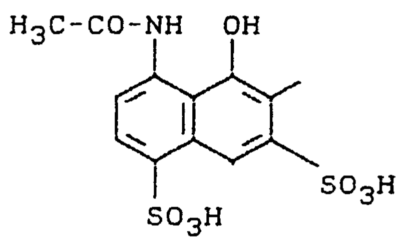

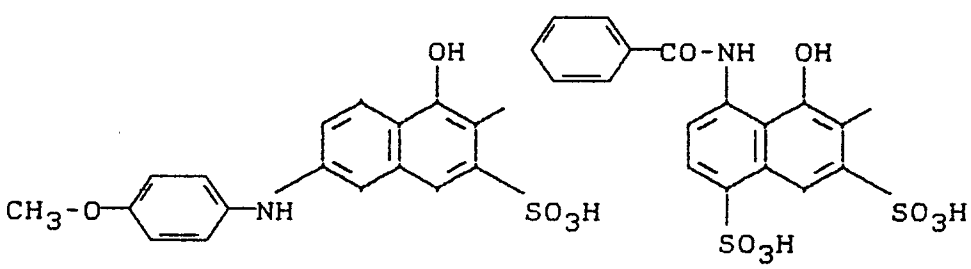

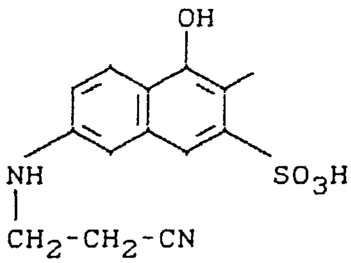

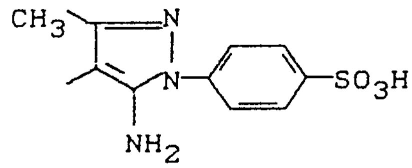

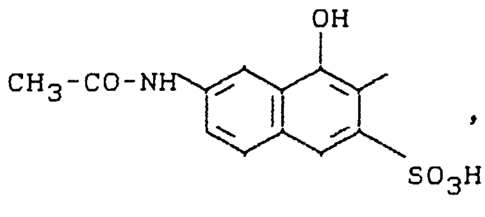

,

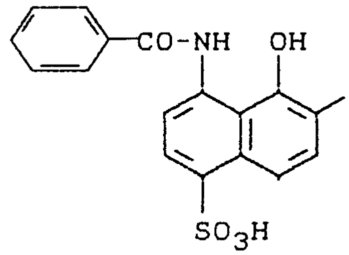

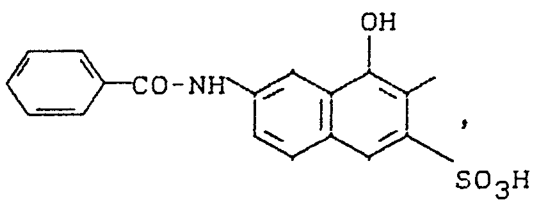

,

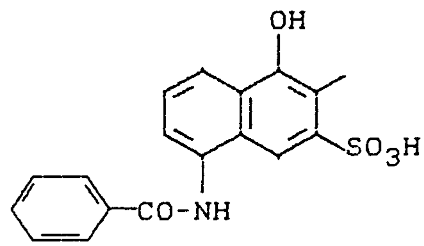

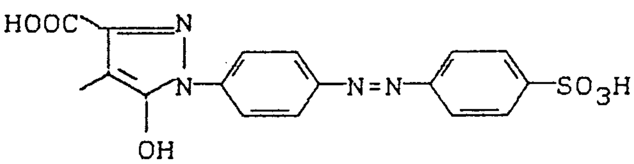

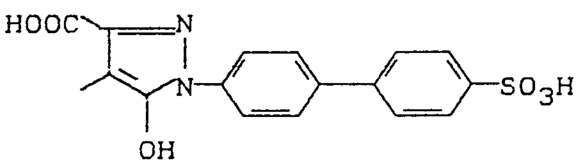

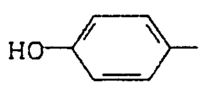

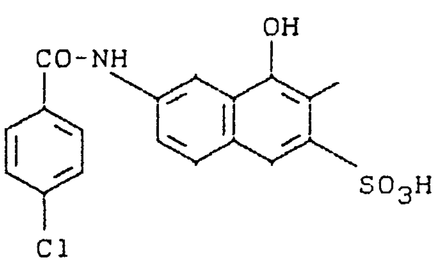

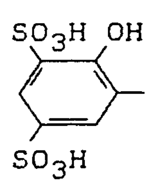

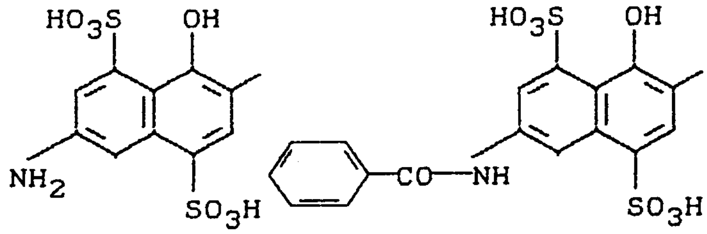

Die Kupplungsprodukte auf Phenole können durch anschließende Alkylierung, z.B. Methylierung mit Dimethylsulfat, "verschlossen" werden.

Beispiel 2

a) 17,3 g (0,1 M) 4-Amino-benzol-sulfonsäure werden in 200 ccm Wasser mit ca. 7 ccm Natronlauge (45 %ig) gelöst und dann auf einmal mit 28 ccm konz. Salzsäure versetzt. Die frisch gefällte Suspension diazotiert man bei 5-10 °C mit 7 g Natriumnitrit in 15 ccm Wasser. Nach 15 Min. saugt man ab und wäscht auf dem Filter mit Eiswasser aus. Das feuchte Produkt wird sofort in 100 ccm Wasser eingetragen (Vorsicht: das trockene Produkt ist explosiv). Zur so erhaltenen Suspension des Diazoniumsalzes wird unter starkem Rühren eine kalte Lösung von 34,1 g (0,1 M) 8-Amino-1-hydroxy-naphthalin-3,6-disulfonsäure-mono-Na-salz und 5,5 g Natriumcarbonat in 100 cm Wasser innerhalb von 45 Min. zugetropft. Dann läßt man unter Erwärmen auf Raumtemperatur 12 Std. rühren, saugt ab und wäscht neutral. Man erhält eine Farbpaste des Farbstoffs der Formel:

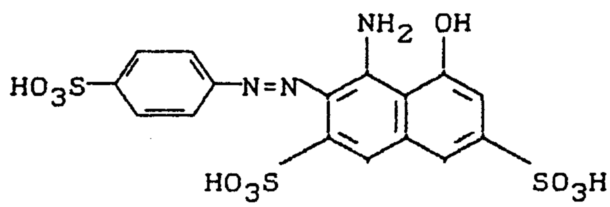

b) Die Farbpaste aus a) wird mit 40 g Natriumcarbonat in ca. 500 ccm Wasser gegebenenfalls unter Erwärmen gelöst und dann auf unter 10 °C abgekühlt. Zu der erhaltenen Suspension tropft man innerhalb von 30 Min. die nach Beispiel 1a hergestellte Tetrazoniumsalzlösung aus 14,5 g (0,05 M) 4,4'-Diaminostilben-2-sulfonsäure, wobei man den pH-Wert durch Zudosieren von 10 proz. Natronlauge bei 6,5 bis 7 hält. Nach Rühren über Nacht wird der Farbstoff abgesaugt, mit Wasser neutral gewaschen und dann in Wasser gelöst zur Abtrennung von Salzen dialysiert. Die Farbstofflösung wird eingedampft und der Rückstand getrocknet. Der erhaltene Farbstoff hat die Struktur:

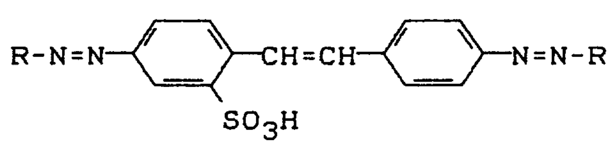

R =

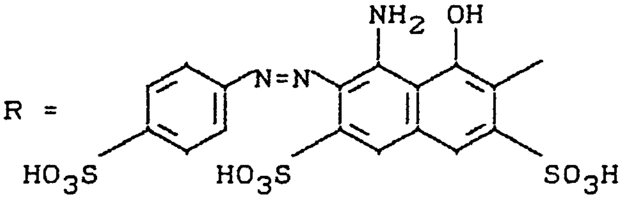

c) Einsetzbar sind auch die folgenden Kupplungskomponenten, die man analog 2a) herstellen kann:

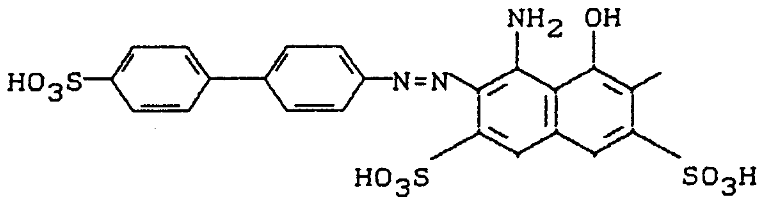

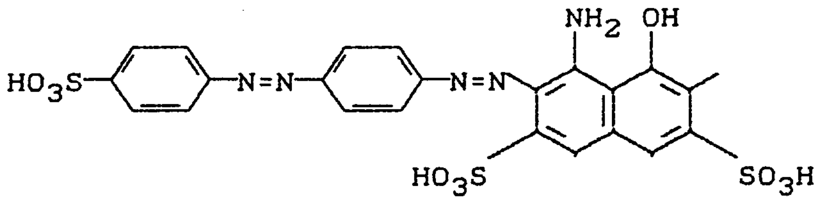

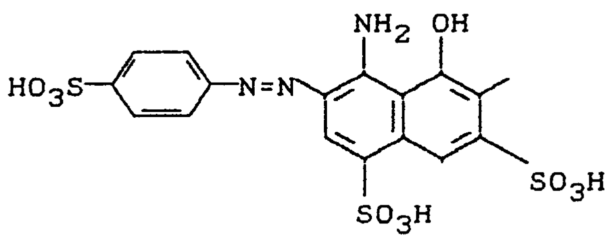

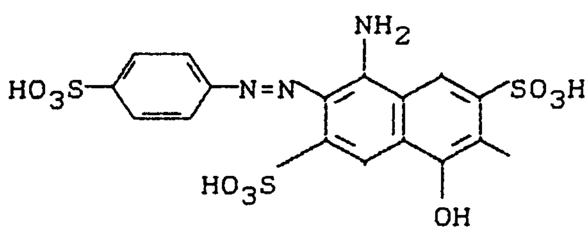

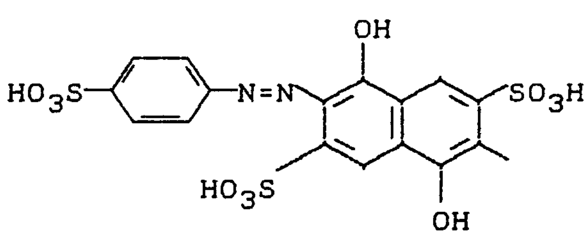

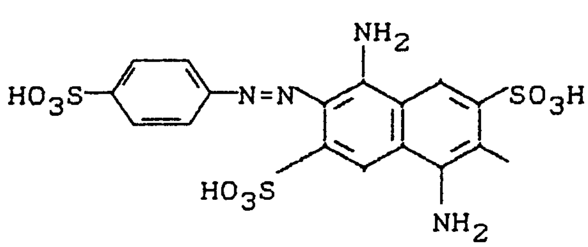

d) Ganz entsprechend erhält man den Farbstoff der Struktur:

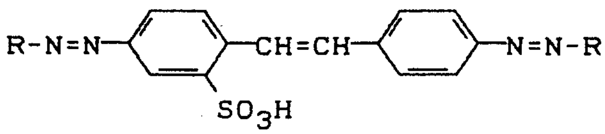

R =

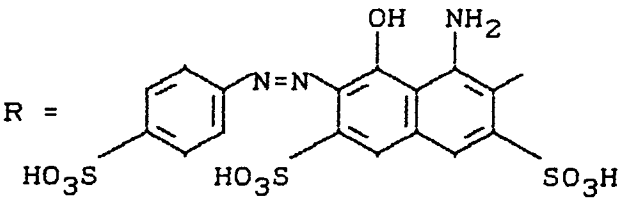

wenn man die Tetrazoniumsalzlösung des Beispiels 1a zunächst bei pH 4,5-5,5 auf 1-Hydroxy-8-aminonaphthalin-3,6-disulfonsäure kuppelt und dann bei pH 7 - 7,5 die nach Beispiel 2a hergestellte Diazoniumverbindung aus 4-Amino-benzol-sulfonsäure zweifach ankuppelt.

Auch mit den anderen in c) genannten Komponenten kann man in umgekehrter Reihenfolge verfahren und gelangt zu analogen Farbstoffen.

Beispiel 3

a) In die nach Beispiel 1a hergestellte Tetrazoniumsalzlösung tropft man bei einer Temperatur von max. 10 °C unter Rühren die Lösung von 30.6 g (0,2 M) 2,5-Dimethoxyanilin in 500 ccm Wasser (wobei man soviel konz. Salzsäure zusetzt, daß eine klare Lösung entsteht), und hält durch gleichzeitiges Zudosieren von Natronlauge einen pH-Wert von 3 bis 4,5 ein. Nach Rühren über Nacht und Erwärmenlassen auf Raumtemperatur ist die Kupplung beendet. Man saugt ab und wäscht vorsichtig mit Wasser neutral. Der nach Trocknen erhaltene Farbstoff wiegt 57,2 g und hat die Formel:

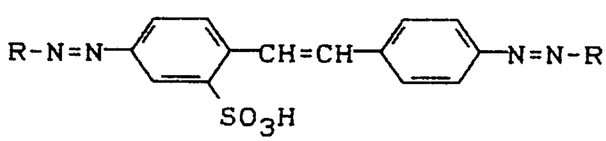

R =

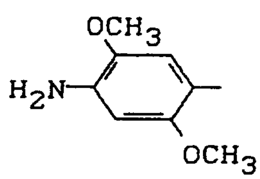

Statt des 2,5-Dimethoxy-anilins kann man auch 2-Methoxy-5-methyl-anilin, 2,5-Dimethylanilin, 3-Methylanilin, 3-Acetylaminoanilin, 1-Naphthylamin, 1-Amino-2-ethoxy-naphthalin-6-sulfonsäure oder Anilinomethansulfonsäure etc. einsetzen.

b) Das in a) erhaltene Zwischenprodukt wird in wäßriger Salzsäure mit Natriumnitrit durch Stehen über Nacht bei Raumtemperatur tetrazotiert und die erhaltene Tetrazoniumsalzlösung nach Zerstörung des Nitritüberschusses bei pH 6,5 bis 8 auf 1-Hydroxy-6-benzoylamino-naphthalin-3-sulfonsäure gekuppelt. Der erhaltene Farbstoff hat die Formel:

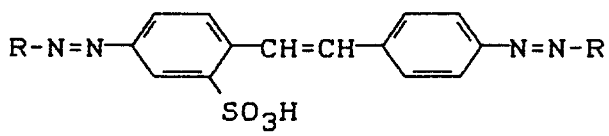

R = 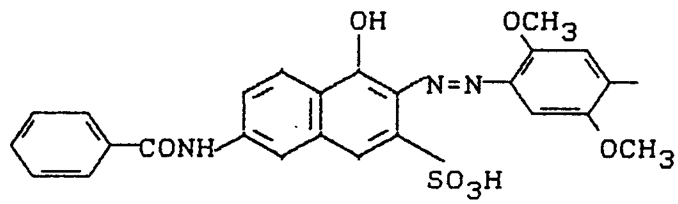

c) Als Komponenten der Endkupplung lassen sich auch die anderen in Beispiel 1e und 2c genannten Verbindungen einsetzen, wobei phenolische Kupplungskomponenten anschließend durch Alkylierung "verschlossen" werden können.

Die erhaltenen Farbstoffe werden entsprechend Beisiel 1b in eine Folie eingebaut, die anschließend gereckt wird.

Beispiel 4

a) 8,8 g (0,01 M) des Farbstoffs aus Beispiel 1e, der durch Kupplung des Tetrazoniumsalzes aus 1a auf 1-Hydroxy-6-acetylamino-naphthalin-3-sulfonsäure entstanden ist, werden in 200 ccm 2n Natronlauge bei 80 °C so lange gerührt, bis die Acetylgruppen vollständig abgespalten sind (Verfolgung der Reaktion durch Dünnschichtchromatographie). Das Reaktionsgemisch wird neutralisiert, nach Erkalten abgesaugt und der Rückstand neutral gewaschen.

b) Der nach a) entstandene Farbstoff wird in 100 ccm 1n Natronlauge gelöst, die Losung mit 1,8 g Natriumnitrit versetzt und dann in überschüssige Salzsäure einfließen lassen. Nach Stehen über Nacht bei Raumtemperatur hat sich die Tetrazoniumsalzlösung gebildet; man zerstört überschüssiges Nitrit mit Amidosulfonsäure, tropft dann 2 g Phenol gelöst in Natronlauge ein und stellt den pH-Wert mit Natronlauge auf ca. 9. Nach 3-stündigem Rühren ist die Kupplung zuende. Man saugt ab und wäscht neutral.

Anstatt von Phenol können auch die anderen in den Tabellen 1e und 2c angeführten Kupplungskomponenten als Endgruppen verwendet werden.

c) Der nach b) gebildete Farbstoff wird in 100 ccm 1n Natronlauge gelöst und die Lösung unter Rühren mit 4 g Dimethylsulfat versetzt. Nach ca. 1 Std. ist die Methylierung beendet. Man saugt ab, wäscht neutral und trocknet. Der erhaltene Farbstoff hat die Formel:

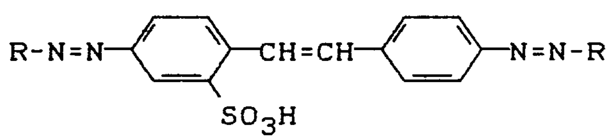

R = 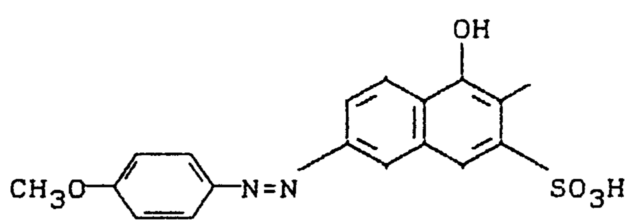

Statt mit Dimethylsulfat können die phenolischen Gruppen auch mit Diethylsulfat oder Benzylbromid in die Ether überführt werden.

Beispiel 5

a) Die Tetrazoniumsalz-Lösung aus Beispiel 1a tropft man bei ca. 10 ° C in die Lösung von 68,4 g (0,2 M) 1-Hydroxy-8-acetylamino-naphthalin-3,6-disulfonsäure (Mono-Na-salz) in 0,8 l Wasser, wobei man durch Zutropfen von 2n-Natronlauge einen pH-Wert von 6,5-7,5 einhält. Anschließend läßt man unter Erwärmen auf Raumtemperatur die Kupplung über Nacht zuende gehen. Man saugt ab, wäscht mit Wasser neutral und trocknet. Ausbeute: 60,5 g eines blauviolett löslichen Farbstoffs.

b) 20 g des Farbstoffs aus a) werden in 200 ccm 2n-Natronlauge so lange auf ca. 80 ° C erhitzt, bis die Acetylgruppen abgespalten sind. Dann säuert man mit Salzsäure an, saugt ab, wäscht neutral und trocknet. Man erhält 14 g eines Farbstoffs, der in Form der freien Säure folgende Formel hat:

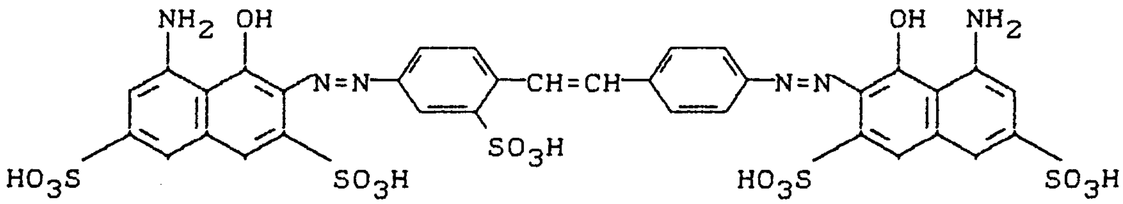

Einen entsprechenden Farbstoff erhält man auch aus der 1-Hydroxy-8-acetylamino-naphthalin-3,5-disulfonsäure und anschließende Spaltung.

Die Farbstoffe lassen sich entsprechend Beispiel 1b in eine Folie einbauen, die anschließend gemäß 1c gereckt wird.

"Unsymmetrische" Farbstoffe

Ein geeignetes Zwischenprodukt zur Herstellung "unsymmetrischer" Verbindungen erhält man analog den Angaben in DBP 1 065 838 (Geigy), indem man den Benzaldehyd durch 4-Acetylaminobenzaldehyd ersetzt. Ebenfalls kann das in DOS 3 805 513 Beispiel 2ter beschriebene Produkt durch Reduktion der Nitrogruppe in ein geeignetes Zwischenprodukt überführt werden.

Beispiel 6

a) 4-Nitro-4'-acetylamino-stilben-2-sulfonsäure:

45,6 g (0,28 M) 4-Acetylamino-benzaldehyd und 59,8 g (0,25 M) 4-Nitro-toluol-2-sulfonsaures Natrium trägt man in 90 ccm DMF ein, versetzt mit 9 ccm Piperidin und erhitzt 3 Std. auf 140-150 ° C. Dann werden die leichtflüchtigen Anteile (Piperidin und Wasser) abdestilliert, der Rückstand mit 9 ccm Piperidin versetzt und erneut 3 Stunden auf 140-150 ° C erhitzt; dieser Vorgang wird noch einmal wiederholte Danach wird das DMF i.Vak. abdestilliert und der Rückstand mit 200 ccm heißem Wasser aufgenommen. Nach dem Abkühlen saugt man das Produkt ab, wäscht es mit wenig Wasser und trocknet: Ausbeute: 65 g (68 %).

b) 4-Nitro-4'-amino-stilben-2-sulfonsäure:

19,2 g (0,05 M) 4-Nitro-4'-acetylamino-stilben-2-sulfonsaures Natrium und 200 g halbkonz. Salzsäure werden auf Rückfluß erhitzt, bis das Ausgangsmaterial lt. Dünnschichtchromatogramm völlig umgesetzt ist. Nach dem Abkühlen saugt man ab, wäscht mit kleinen Wasserportionen neutral und trocknet das Produkt. Ausbeute: 14 g (88 %).

c) 16 g (0,05 M) 4-Nitro-4'-amino-stilben-2-sulfonsäure (Beispiel 6b) werden in 400 ccm Wasser suspendiert und mit 40 ccm konz. Salzsäure versetzt. Man diazotiert durch Eintropfen von 12.8 ccm 30 proz. Natriumnitrit-Lösung (0,05 M + 10 %) bei max. 10 ° C und läßt dann über Nacht bei ca. 20 ° C nachrühren. Danach wird der Nitrit-Überschuß durch Zugabe von Amidosulfonsäure zerstört.

Die erhaltene Diazoniumsalzlösung läßt man zu einer Lösung von 17,2 g (0,05 M) 1-Hydroxy-6-benzoylamino-naphthalin-3-sulfonsäure in 160 ccm Wasser bei ca. 20 ° C eintropfen, wobei man den pH-Wert durch Zutropfen von Natronlauge im Bereich von 7-8 hält. Nach Rühren über Nacht wird der ausgefallene Farbstoff abgesaugt, mit wenig Wasser neutral gewaschen und getrocknet. Ausbeute: 27 g (80 %). Man erhält einen Farbstoff der Struktur:

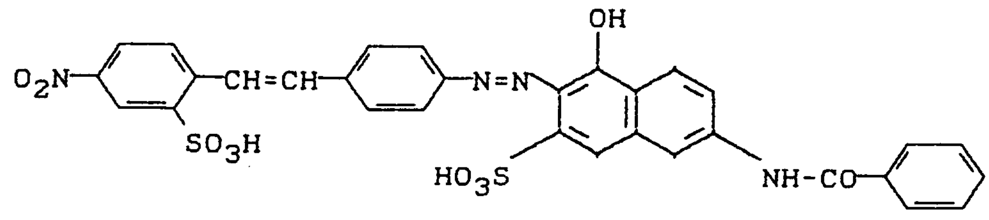

Ganz entsprechend wie zuvor beschrieben erhält man bei Ersatz der 1-Hydroxy-6-benzoylamino-naphthalin-3-sulfonsäure durch 1-Hydroxy-6-anilino-naphthalin-3-sulfonsäure einen analogen Farbstoff.

Weitere geeignete Kupplungskomponenten sind die in der Tabelle der Beispiele 1e und 2c genannten.

d) Reduziert man die Nitrogruppe der nach a) erhaltenen 4-Nitro-4'-acetylamino-stilben-2-sulfonsäure in wäßrigem Ethanol mit Natriumsulfid oder analog den Angaben in DOS 38 05 513, Beispiel 3, so erhält man 4-Amino-4'-acetylamino-stilben-2-sulfonsäure.

Ganz entsprechend kann man auch die 4-Amino-4'-benzoylaminostilben-2-sulfonsäure darstellen.

e) Diazotiert man die 4-Amino-4'-acetylamino-stilben-2-sulfonsäure entsprechend den Angaben des Beispiels 6c, zerstört dann den Nitritüberschuß mit Amidosulfonsäure und kuppelt auf 1-Hydroxy-6-benzoylamino-naphthalin-3-sulfonsäure unter Einhaltung eines pH-Wertes von 7-8, so erhält man einen Farbstoff der Struktur:

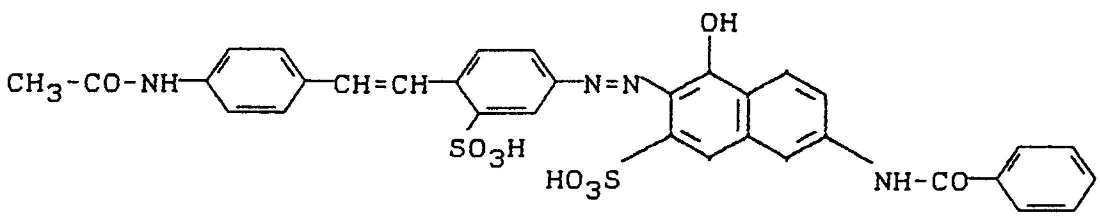

Den entsprechenden Farbstoff mit einer Benzoylaminogruppe am Stilbenrest erhält man analog.

Als weitere Kupplungskomponenten lassen sich auch die anderen in den Beispielen 1e und 2c genannten Verbindungen einsetzen.

Beispiel 7

a) In die nach Beispiel 6c hergestellte Diazoniumsalz-Lösung tropft man bei einer Temperatur von max. 10 °C unter Rühren die Lösung von 7,8 g (0,05 M) 2,5-Dimethoxy-anilin in 125 ccm Wasser (gelöst mit soviel konz. Salzsäure, daß eine klare Lösung entsteht), wobei man durch Zudosieren von Natronlauge einen pH-Wert von 3 bis 4,5 einhält. Nach Rühren über Nacht, wobei man die Temperatur auf Raumtemperatur ansteigen läßt, ist die Kupplung beendet. Man saugt ab und wäscht vorsichtig mit Wasser neutral.

Statt des 2,5-Dimethoxy-anilins kann man auch 2-Methoxy-5-methyl-anilin, 2,5-Dimethylanilin, 3-Methyl-anilin, 3-Acetylaminoanilin, 1-Naphthylamin, 1-Amino-2-ethoxy-naphthalin-6-sulfonsäure oder Anilinomethansulfonsäureetc. einsetzen.

b) Das in a) erhaltene Zwischenprodukt wird als Paste in wäßriger Salzsäure mit Natriumnitrit diazotiert, wobei man die Diazotierung durch Stehen über Nacht und Erwärmen bis auf Raumtemperatur zuende gehen läßt. Überschüssiges Nitrit wird mit Amidosulfonsäure zerstört.

Die Diazoniumsalzlösung wird bei pH 6,5 bis 7,5 auf 1-Hydroxy-6-anilino-naphthalin-3-sulfonsäure gekuppelt. Der erhaltene Farbstoff hat die Formel

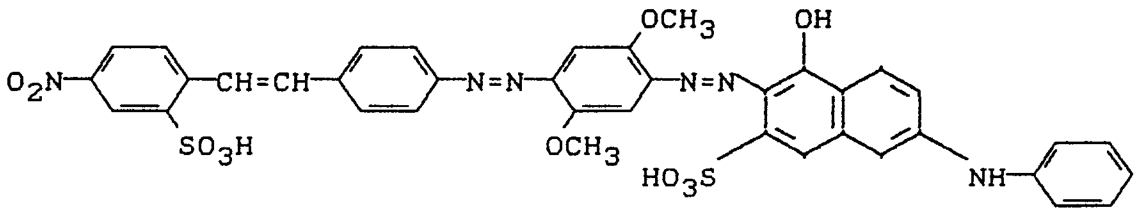

Als Komponenten der Endkupplung lassen sich auch die anderen in den Beispielen 1e und 2c genannten Verbindungen einsetzen.

Zur denselben Farbstoffen gelangt man, wenn man den Angaben in EP 160113 folgt, nur daß man das dort eingesetzte Natrium 4-Nitro-4'-amino-stilben-2,2'-disulfonat durch die 4-Nitro-4'-amino-stilben-2-sulfonsäure ersetzt und die Mittelkomponente (2-Methoxy-5-methyl-anilin) entsprechend wählt.

Beispiel 8

a) Der noch eine Nitrogruppe enthaltende Farbstoff des Beispiels 6c wird in einem Ethanol/Wasser-Gemisch mit Natriumsulfid oder analog den Angaben in DOS 38 05 513, Beispiel 3 zur Aminoverbindung reduziert. Eine andere Reduktionsmöglichkeit ist die mit Eisenpulver in schwach saurem wäßrigem Medium nach Bechamp.

b) 16,1 g (0,025 M) des unter a) erhaltenen Farbstoffs suspendiert man in 300 ccm Wasser, versetzt mit 20 ccm konz. Salzsäure und diazotiert durch Eintropfen von 6,4 ccm 30 proz. Natriumnitrit-Lösung (0,025 M + 10 %) bei max. 10 °C und läßt dann über Nacht bei Raumtemperatur nachrühren. Dann wird der Nitritüberschuß durch Zugabe von Amidosulfonsäure zerstört.

Die erhaltene Diazoniumsalzlösung läßt man zu einer Lösung von 8 g (0,025 M) 1-Amino-8-hydroxy-naphthalin-2,4-disulfonsäurein 80 ccm Wasser bei ca. 20 °C eintropfen und hält dabei den pH-Wert im Bereich von 7. Nach Rühren über Nacht wird der ausgefallene Farbstoff abgesaugt, mit wenig Wasser gewaschen und getrocknet. Der erhaltene Farbstoff hat die Struktur:

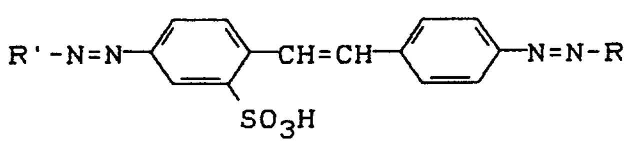

R' = 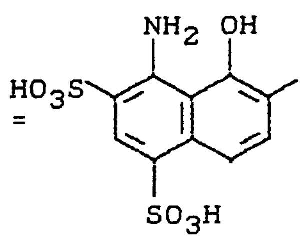

R = 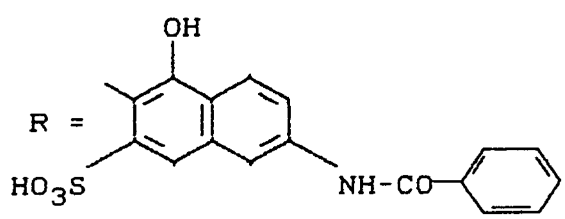

Als Kupplungskomponenten lassen sich auch die anderen in den Beispielen 1e und 2c genannten Verbindungen einsetzen.

Beispiel 9

a) Man löst 5 g (ca. 0,05 M) Phenol in 100 ccm Wasser unter Zusatz von Natronlauge bis zur klaren Lösung und tropft hierzu bei etwa 10 °C die in Beispiel 6c erhaltene Diazoniumsalzlösung, wobei man durch Zugabe von Natronlauge einen pH-Wert von etwa 9 einhält. Nach Rühren über Nacht wird neutralisiert, der Niederschlag abgesaugt und gewaschen.

Die Feuchtpaste wird in Analogie zu den Angaben in Beispiel 4c in wäßrig alkalischer Lösung mit Dimethylsulfat umgesetzt, bis vollständige Methylierung eingetreten ist. Man erhält einen Farbstoff der

Struktur:

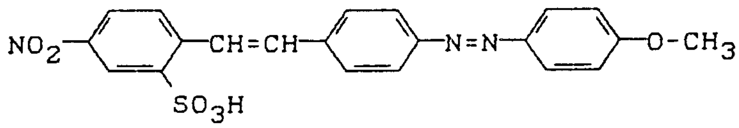

Analog kann man auch mit anderen Alkylierungsmitteln, z.B. Diethylsulfat oder Benzylbromid umsetzen.
b) Der unter a) erhaltene Farbstoff wird mit Natriumsulfid in Ethanol und Wasser oder mit Eisenpulver in schwach saurem Medium zum Amin reduziert. Dieses wird analog Beispiel 6c mit Natriumnitrit diazotiert und dann überschüssiges Nitrit mit Amidosulfonsäure zerstört.

Die erhaltene Diazoniumsalzlösung wird entsprechend den weiteren Angaben in Beispiel 6c auf 1-Hydroxy-6-benzoylamino-naphthalin-3-sulfonsäure bei einem pH-Wert zwischen 7 und 8 gekuppelt, wobei man einen Farbstoff der nachstehenden Formel erhält:

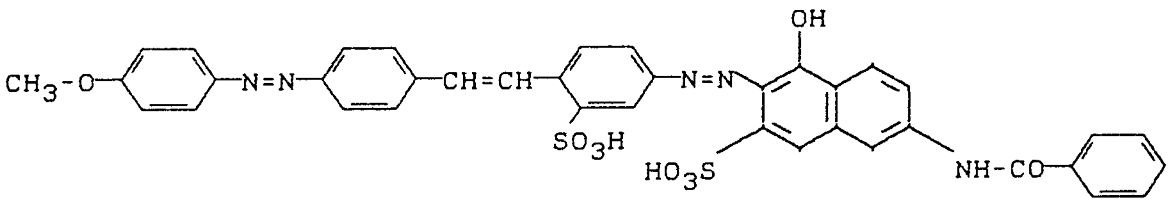

Als Komponenten der Endkupplung lassen sich auch die anderen in den Beispielen 1e und 2c genannten Verbindungen einsetzen, insbesondere Acetyl-I-säure, Phenyl-I-säure, Chicagosäure SS etc.

Beispiel 10

a) 4-Amino-4'-nitro-stilben-2-sulfonsäure

Die Verbindung wird hergestellt durch Spaltung der in DOS 3 805 513, Bsp. 2ter beschriebenen 4-Acetylaminoverbindung analog Beispiel 6b.
b) Durch Diazotierung der in 10a hergestellten Aminoverbindung und Kupplung auf die 1-Hydroxy-6-anilino-naphthalin-3-sulfonsäure analog den Angaben in 6c erhält man den folgenden Farbstoff:

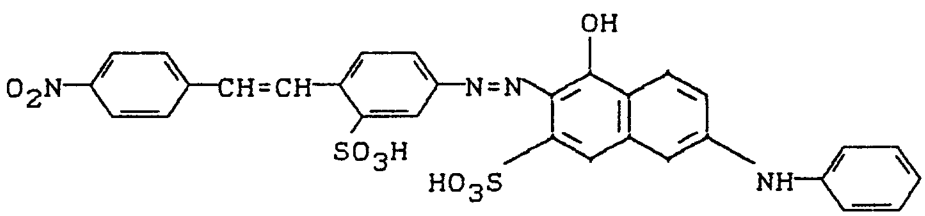

Weitere geeignete Kupplungskomponenten sind die in der Tabelle der Beispiele 1e und 2c genannten.

Analog erhält man auch durch Anwendung der Vorschriften der Beispiele 6 bis 9 die bezüglich der Stellung der Sulfonsäuregruppe isomeren Farbstoffe, die ganz entsprechende Farbnuancen besitzen.

Kondensationsfarbstoffe

Beispiel 11

Verfährt man nach den Angaben des Beispiels in Houben-Weyl, Methoden der Organischen Chemie, Bd. 10/3, Teil 3, S. 343 und ersetzt das 1,2-Bis-(4-nitro-2-sulfophenyl)-ethylen durch die nach DOS 38 05 513, Beispiel 2 hergestellte 4,4'-Dinitro-stilben-2-sulfonsäure, so erhält man analog der dortigen Beschreibung hauptsächlich das gelbe Kondensationsprodukt der Formel:

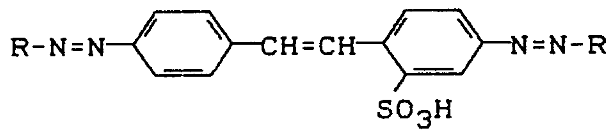

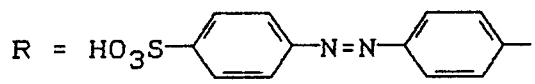

Beispiel 12

Die in J. Org. Chem. USSR 16 (1980) 388 beschriebene Umsetzung der 4-Amino-4'-nitro-stilben-2,2'-disulfonsäure wird auf die Monosulfonsäure übertragen:

a) 25 g (0,1 M) Kupfer(2)-sulfat-pentahydrat löst man unter Erwärmen in 80 ccm Wasser und gibt dazu 15,5 g (0,15 M) Natriumbromid. Zu der Lösung gibt man langsam unter Rühren eine Lösung von 6,3 g (0,05 M) wasserfreiem Natriumsulfit in 20 ccm Wasser. Nach dem Abkühlen wird der ausgefallene Niederschlag durch Dekantieren abgetrennt, mit Wasser gewaschen und dann in 40 ccm konz. Bromwasserstoffsäure gelöst.

24 g (0,075 M) des Amins des Beispiels 6b werden analog der Vorschrift des Beispiels 6c, jedoch unter Zusatz von Bromwasserstoffsäure statt Salzsäure diazotiert. Die Diazoniumsalzlösung wird dann unter Rühren bei 0 °C in die zuvor hergestellte, obige Cu-Salzlösung eingerührt. Die Mischung wird vorsichtig erwärmt, wobei sich unter Stickstoffentwicklung das SANDMEYER-Produkt bildet. Nach beendeter Gasentwicklung wird die entstandene Bromverbindung der Struktur:

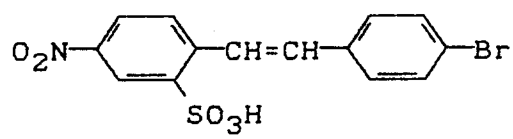

durch Aussalzen gefällt, abgesaugt, gewaschen und getrocknet.

Ganz entsprechend kann man auch statt der Bromverbindung die entsprechende Chlorverbindung oder das Cyanid herstellen.

Wird statt des Amins des Beispiels 6b das Amin des Beispiels 10a eingesetzt und statt Bromwasserstoffsäure Chlorwasserstoffsäure verwendet, so erhält man entsprechend:

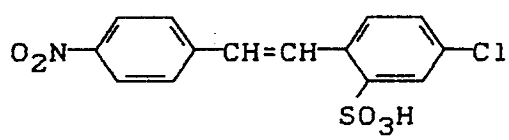

b) Die Verbindung des Beispiels 12a wird analog den Angaben in Beispiel 9b zur Aminoverbindung reduziert. Diese wird in das entsprechende Diazoniumsalz überführt, z.B. wie in 6c beschrieben, und dann wie ebenfalls in 6c beschrieben unter Einhaltung eines pH-Wertes von ca. 7-8 auf 1-Hydroxy-6-benzoylamino-naphthalin-3-sulfonsäure gekuppelt. Man erhält einen Farbstoff der Struktur:

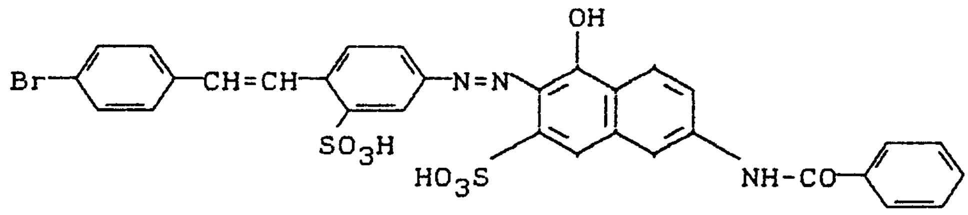

Weitere geeignete Kupplungskomponenten sind die in den Tabellen 1e und 2c genannten.

c) Wenn man nach den Angaben des Beispiels 7 verfährt und statt der in 7a eingesetzten Diazoniumsalzlösung die in 12b hergestellte verwendet, zunächst auf 3-Methyl-anilin und dann auf 1-Hydroxy-6-anilino-naphthalin-3-sulfonsäure kuppelt, so erhält man einen Farbstoff der Struktur:

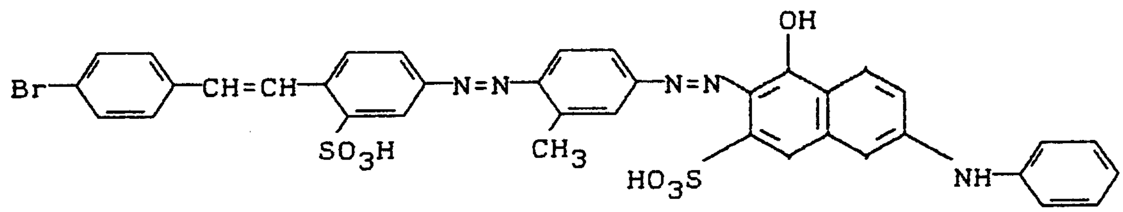

Weitere geeignete Kupplungskomponenten sind die in den Tabellen 1e und 2c genannten.

Statt des 3-Methylanilins kann man auch 2,5-Dimethoxy-anilin, 2-Methoxy-5-methyl-anilin, 2,5-Dimethylanilin, 3-Acetylaminoanilin, 1-Naphthylamin, 1-Amino-2-ethoxy-naphthalin-6-sulfonsäure oder Anilinomethansulfonsäureetc, einsetzen.

d) Setzt man in 12b und c) statt der Bromverbindung aus 12a die entsprechende Chlor- oder Cyanverbindung ein, so erhält man die analogen Farbstoffe.

Beispiel 13

Lichtpolarisierende Folien mit ähnlich guten dichroitischen Eigenschaften erhält man, wenn man in Beispiel 1 das Mowiol® 28-99 durch Mowiol® 40-88 (verseiftes Polyvinylacetat; Verseifungsgrad 87,7 ± 1,0 Mol.-%, Viskosität der 4%igen wäßrigen Lösung bei 20 °C: 40 ± 2,0 mPa.sec$^2$; Hersteller: Hoechst AG) oder Mowiol® 4-98 (verseiftes Polyvinylacetat; Verseifungsgrad 98,4 ± 0,4 Mol.-%, Viskosität der 4%igen wäßrigen Lösung bei 20 °C: 4 ± 1,0 mPa.sec$^2$; Hersteller: Hoechst AG) oder Mowiol® 66-100 (verseiftes Polyvinylacetat, Verseifungsgrad 99,7 ± 0,3 %; Viskosität der 4%igen wäßrigen Lösung bei 20 °C: 66 ± 4,0 mPa.sec$^2$; Hersteller: Hoechst AG) ersetzt.

Beispiel 14

Analog zu den Beispielen 1 und 13 werden lichtpolarisierende Folien mit den Farbstoffen aus den Beispielen 2-12 hergestellt. Die erhaltenen Folien zeichnen sich durch gute dichroitische Eigenschaften aus.

**Patentansprüche**

**1.** Farbstoffe, die in Form der freien Säure der Formel

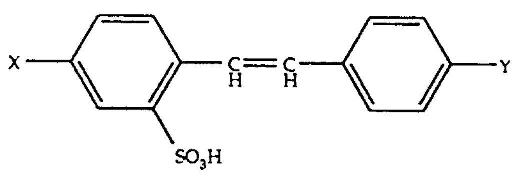

I

entsprechen, in der

X, Y -N=N-R, $-CF_3$, $-CONH_2$, $-CONHR^1$, $-CONR^1R^2$, -COOH, $-COOR^1$, -CN, $-NO_2$, $-NH_2$, $-NHR^1$, $-NR^1R^2$, -OH, $-NHCOR^1$ oder $-O-CO-R^1$,

$R^1$, $R^2$ gegebenenfalls durch O und/oder S unterbrochenes Alkyl, Cycloalkyl, Aryl oder Aralkyl bedeuten,

mit der Maßgabe, daß mindestens einer der Reste X, Y für -N=N-R steht, wobei

R einem aromatischen Rest der Formel

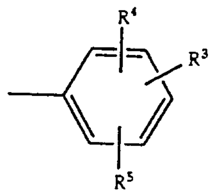

oder

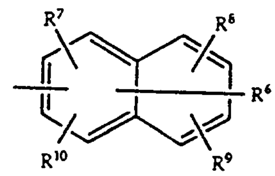

entspricht, wobei

| | |
|---|---|
| $R^3$ | H, OH, $-OR^1$, $-NH_2$, $-NHR^1$, $-NR^1R^2$, $-NH-COR^1$, $-O-COR^1$, $-N=N-R^{11}$, |
| $R^4$, $R^5$, $R^7$, $R^8$, $R^9$, $R^{10}$ | H, Halogen, -OH, $-OR^1$, $-NH_2$, $-NHR^1$, $-NR^1R^2$, $R^1$, $-SO_3H$, $-SO_2-NH_2$, $-SO_2-NHR^1$, $-SO_2-NR^1R^2$, $-O-CO-R^1$, $NHCOR^1$, |
| $R^6$ | H oder $-N=N-R^{11}$ bedeuten, wobei |
| $R^{11}$ | einem aromatischen Rest der Formel |

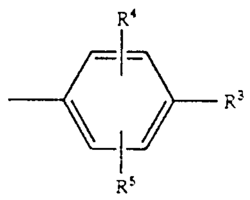 , 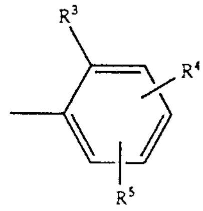 , 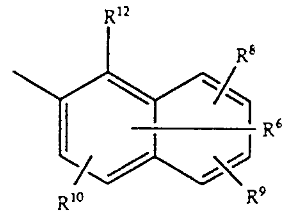

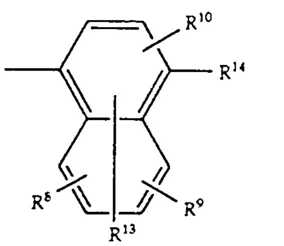 , 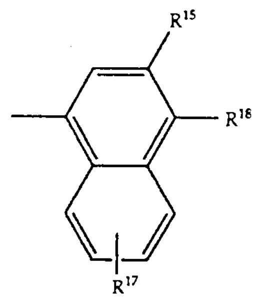

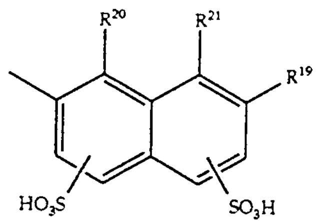 , 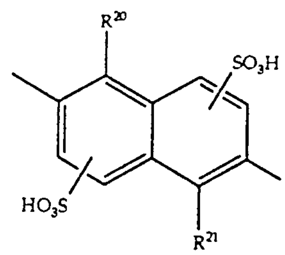

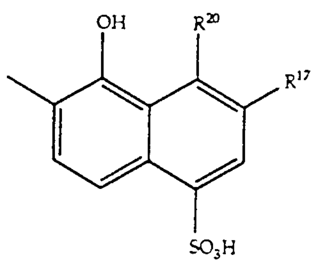 or 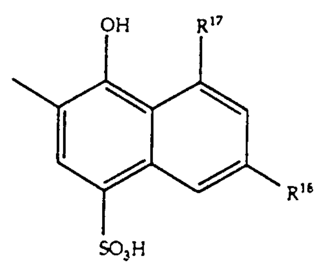

entspricht, wobei

| | |
|---|---|
| $R^{12}$ | -OH oder $-NH_2$, |
| $R^{13}$ | H, wenn $R^{14}$ = $-N=N-R^{11}$ oder H,$-N=N-R^{11}$, wenn $R^{14}$ = -OH, $-NH_2$, |
| $R^{14}$ | -OH, $-NH_2$, $-N=N-R^{11}$, |
| $R^{15}$ | H, -OH, $-OR^1$, $-O-COR^1$, $-NH_2$, $-NHR^1$, $-NR^1R^2$, $-NHCOR^1$, $-SO_3H$, |
| $R^{17}$ | H oder $-SO_3H$, |
| $R^{18}$ | H, -OH, $-NH_2$, $-NHCOR^1$, $-NHR^1$, $-N=N-R^{11}$, $-SO_3H$, |
| $R^{19}$ | H oder $-N=N-R^{11}$, |
| $R^{20}$, $R^{21}$, | -OH, $-NH_2$, $O-CO-R^1$ oder $NHCOR^1$ bedeuten, |

wobei weiterhin die für $R^1$ und $R^2$ genannten Reste im Fall von $R^1/R^2$ = Alkyl oder Cycloalkyl durch Halogen, -OH, -CN und $C_1$-$C_4$-Alkoxy und im Fall von $R^1/R^2$ = Aryl oder Aralkyl durch Halogen, -OH, $C_1$-$C_4$-Alkoxy, $C_1$-$C_4$-Alkyl, $-CF_3$, $-NO_2$ und -CN substituiert sein können, wobei der Farbstoff der in Form seiner freien Säure der Formel I mit

X =

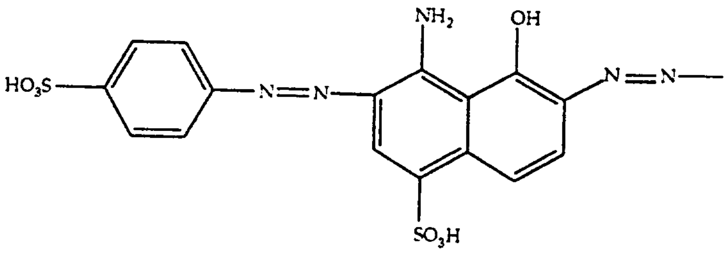

und

Y =

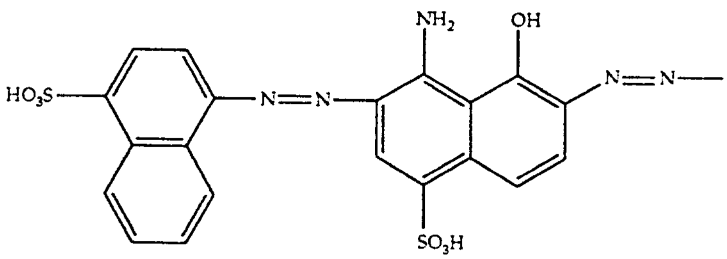

entspricht,
ausgenommen ist und die Azofarbstoffe höchstens acht Azobrücken enthalten.

**2.** Farbstoffe nach Anspruch 1, in denen X und Y für den Rest -N = N-R stehen und R

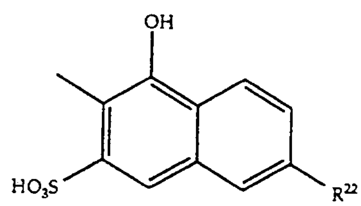

bedeutet, wobei $R^{22}$ für den Rest -N = N-$R^{11}$ steht und $R^{11}$

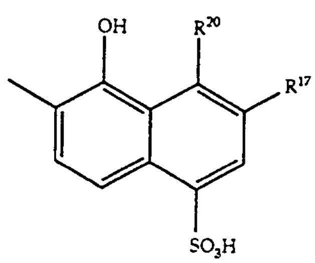

bedeutet, wobei
$R^{17}$ für H oder $-SO_3H$
und
$R^{20}$ für -OH oder $-NH_2$ stehen.

**3.** Lichtpolarisierende Filme oder Folien, enthaltend ein organisches Polymer und einen Farbstoff oder mehrere gemäß den Ansprüchen 1-2.

**4.** Lichtpolarisierende Filme oder Folien gemäß Anspruch 3, enthaltend ein Vinylalkoholhomo- oder copolymer.

**5.** Lichtpolarisierende Filme oder Folien gemäß einem oder mehrerer der Ansprüche 3-4, enthaltend 0.01 bis 10 Gew.-%, bezogen auf das Filmgewicht, eines Farbstoffes gemäß den Ansprüchen 1-2.

## Claims

**1.** Colorants which in the free acid form correspond to the formula

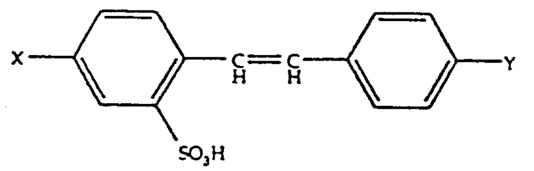

I

wherein
X,Y denote -N=N-R, $-CF_3$, $-CONH_2$, $-CONHR^1$, $-CONR^1R^2$, -COOH, $-COOR^1$, -CN, $-NO_2$, $-NH_2$, $-NHR^1$, $-NR^1R^2$, -OH, $-NHCOR^1$ or $-O-CO-R^1$,
$R^1$,$R^2$ denote alkyl, cycloalkyl, aryl or aralkyl, optionally interrupted by O and/or S,
with the provision that at least one of the residues X and Y represents -N=N-R, wherein
R denotes an aromatic residue of the formula

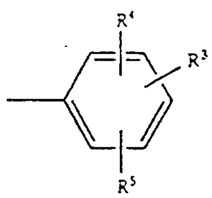

or

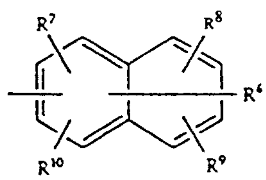

wherein

| | |
|---|---|
| $R^3$ | denotes H, OH, $-OR^1$, $-NH_2$, $-NHR^1$, $-NR^1R^2$ $-NH-COR^1$, $-O-COR^1$, $-N=N-R^{11}$, |
| $R^4$,$R^5$,$R^7$,$R^8$,$R^9$,$R^{10}$ | denote H, halogen, -OH, $-OR^1$, $-NH_2$, $-NHR^1$, $-NR^1R^2$, $R^1$, $-SO_3H$, $-SO_2-NH_2$, $-SO_2-NHR^1$, $-SO_2-NR^1R^2$, $-O-CO-R^1$, $NHCOR^1$, |
| $R^6$ | denotes H or $-N=N-R^{11}$, wherein |
| $R^{11}$ | corresponds to an aromatic residue of the formula |

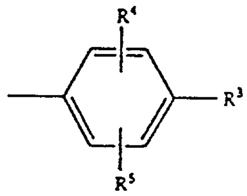,
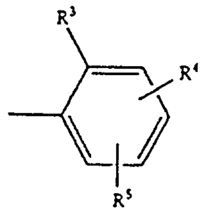,
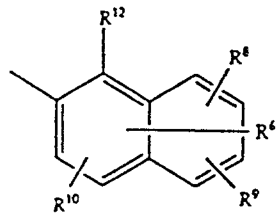

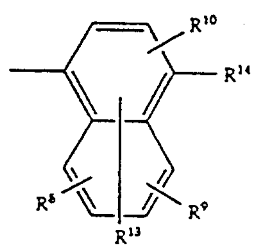,
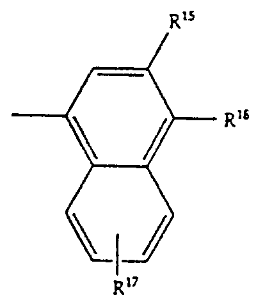

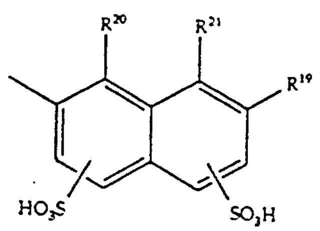,
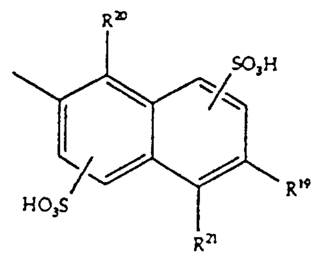

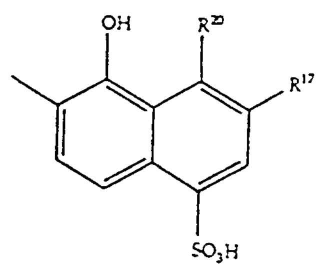
or
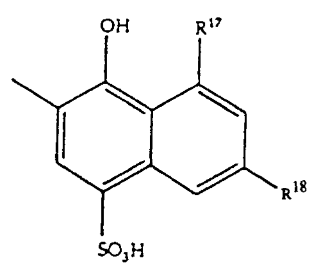

wherein

| | |
|---|---|
| $R^{12}$ | denotes -OH or $-NH_2$, |
| $R^{13}$ | denotes H if $R^{14}$ = $-N=N-R^{11}$ or denotes H, $-N=N-R^{11}$ if $R^{14}$ = -OH, $-NH_2$, |
| $R^{14}$ | denotes -OH, $-NH_2$, $-N=N-R^{11}$, |
| $R^{15}$ | denotes H, -OH, $-OR^1$, $-O-COR^1$, $-NH_2$, $-NHR^1$, $-NR^1R^2$, $-NHCOR^1$, $-SO_3H$, |
| $R^{17}$ | denotes H or $-SO_3H$, |
| $R^{18}$ | denotes H, -OH, $-NH_2$, $-NHCOR^1$, $-NHR^1$, $-N=N-R^{11}$, $-SO_3H$, |
| $R^{19}$ | denotes H or $-N=N-R^{11}$, |
| $R^{20}$, $R^{21}$ | denote -OH, $-NH_2$, $O-CO-R^1$ or $NHCOR^1$, |

wherein, furthermore, the residues specified for $R^1$ and $R^2$ may be optionally substituted by halogen, -OH, -CN and $C_1$-$C_4$-alkoxy in the case where $R^1/R^2$ = alkyl or cycloalkyl and, in the case where $R^1/R^2$ = aryl or aralkyl, by halogen, -OH, $C_1$-$C_4$-alkoxy, $C_1$-$C_4$-alkyl, $-CF_3$, $-NO_2$ and -CN, the colorant which in its free acid form corresponds to Formula I where

X =

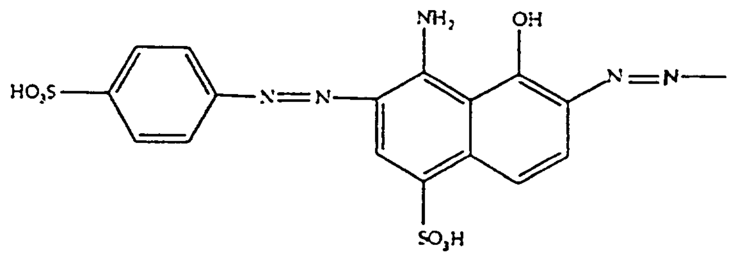

and

Y =

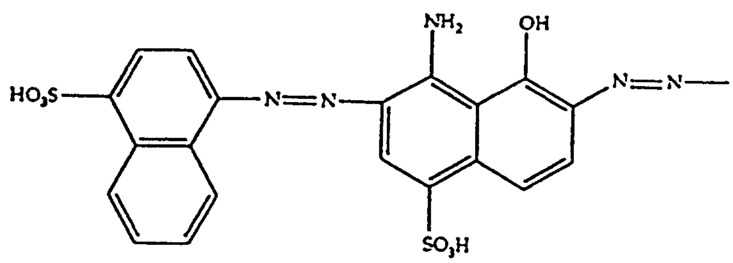

being excepted, and the azo colorants containing at most eight azo links.

**2.** Colorants according to Claim 1, in which X and Y represent the -N = N-R residue and R denotes

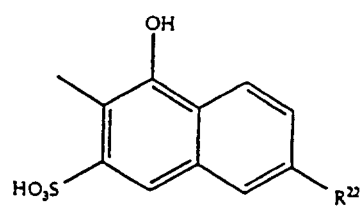

wherein $R^{22}$ represents the -N = N-$R^{11}$ residue and $R^{11}$ denotes

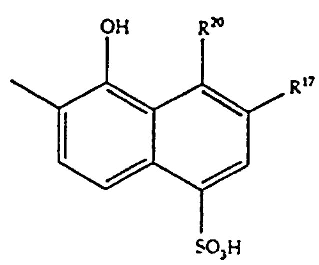

wherein

$R^{17}$ represents H or $-SO_3H$

and

$R^{20}$ represents -OH or $-NH_2$.

3. Light-polarizing films or foils containing an organic polymer and one or more colorants according to Claims 1 and 2.

4. Light-polarizing films or foils according to Claim 3, containing a vinyl alcohol homopolymer or copolymer.

5. Light-polarizing films or foils according to one or more of Claims 3 to 4, containing 0.01 to 10 wt. %, based on the film weight, of a colorant according to Claims 1 and 2.

## Revendications

1. Colorants qui, à l'état d'acides libres, répondent à la formule :

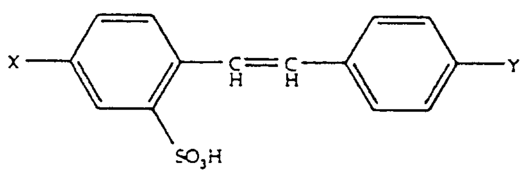

I

dans laquelle
X, Y représentent -N=N-R, $-CF_3$, $-CONH_2$, $-CONHR^1$, $-CONR^1R^2$, -COOH, $-COOR^1$, -CN, $-NO_2$, $-NH_2$, $-NHR^1$, $-NR^1R^2$, -OH, $-NHCOR^1$ ou $-O-CO-R^1$
$R^1$, $R^2$ représentent des groupes alkyle, cycloakyle, aryle ou aralkyle éventuellement interrompus par O et/ou S,
sous réserve que l'un au moins des symboles X, Y représente -N=N-R dans lequel R représente un radical aromatique, de formule :

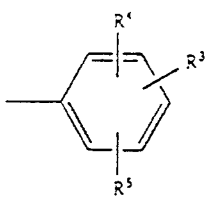

ou

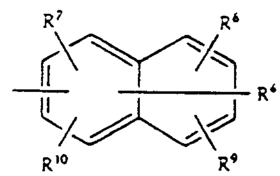

dans lequel
$R^3$ représente H, -OH, $-OR^1$, $-NH_2$, $-NHR^1$, $-NR^1R^2$, $-NH-COR^1$, $-O-COR^1$, $-N=N-R^{11}$,
$R^4$, $R^5$, $R^7$, $R^8$, $R^9$, $R^{10}$ représentent H, un halogène, -OH, $-OR^1$, $-NH_2$, $-NHR^1$, $-NR^1R^2$, $R^1$, $-SO_3H$, $-SO_2-NH_2$, $-SO_2-NHR^1$, $-SO_2-NR^1R^2$, $-O-CO-R^1$, $-NHCOR^1$,
$R^6$ représente H, $-N=N-R^{11}$ dans lequel
$R^{11}$ représente un radical aromatique de formule :

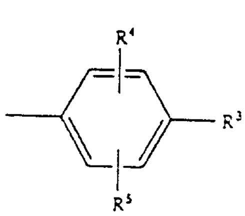

,

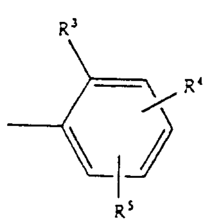

,

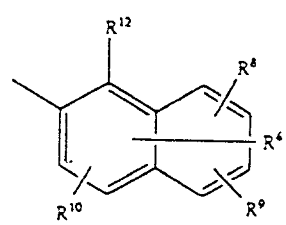

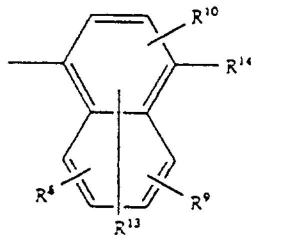
,
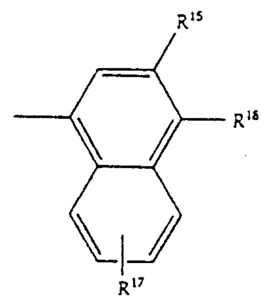

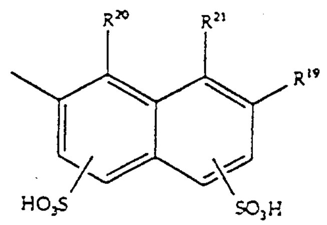
,
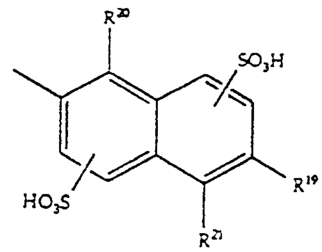

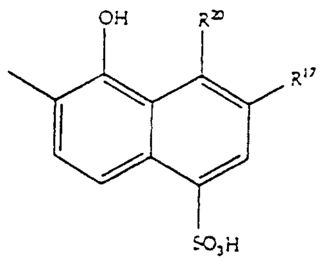
ou
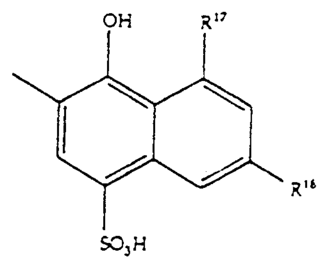

où
$R^{12}$ représente -OH ou $-NH_2$,
$R^{13}$ représente H, lorsque $R^{14}$ = $-N=N-R^{11}$ ou H, $-N=N-R^{11}$, lorsque $R^{14}$ = -OH, $-NH_2$,
$R^{14}$ représente -OH, $-NH_2$, $-N=N-R^{11}$,
$R^{15}$ représente H, -OH, $-OR^1$, $-O-COR^1$, $-NH_2$, $-NHR^1$, $-NR^1R^2$, $-NHCOR^1$, $-SO_3H$,
$R^{17}$ représente H ou $-SO_3H$,
$R^{18}$ représente H, -OH, $-NH_2$, $-NHCOR^1$, $-NHR^1$, $-N=N-R^{11}$, $-SO_3H$,
$R^{19}$ représente H ou $-N=N-R^{11}$,
$R^{20}$, $R^{21}$ représentent -OH, $-NH_2$, $O-CO-R^1$ ou $NHCOR^1$,
les radicaux mentionnés en référence à $R^1$ et $R^2$ pouvant encore être substitués, lorsque $R^1/R^2$ = alkyle ou cycloalkyle, par des halogènes, des groupes -OH, -CN et alcoxy en $C_1$-$C_4$, et lorsque $R^1/R^2$ = aryle ou aralkyle, par des halogènes, des groupes -OH, alcoxy en $C_1$-$C_4$, alkyle en $C_1$-$C_4$, $-CF_3$, $-NO_2$ et -CN,
sous réserve que le colorant qui, à l'état d'acide libre, répond à la formule I dans laquelle

X =

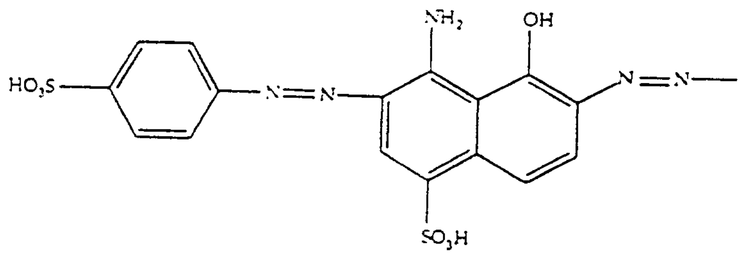

et

Y =

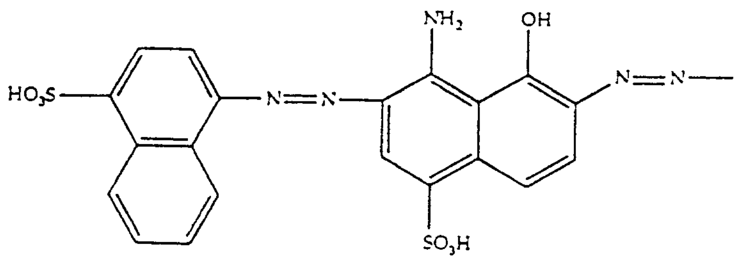

est exclu, et que les colorants azoïques contiennent au maximum 8 ponts azo.

**2.** Colorants selon la revendication 1, dans lesquels X et Y représentent le groupe -N=N-R et R représente

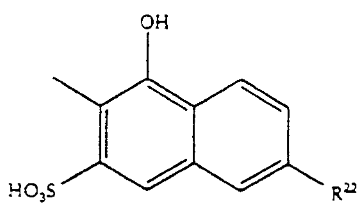

dans lequel $R^{22}$ représente le groupe $-N=N-R^{11}$ et $R^{11}$ représente

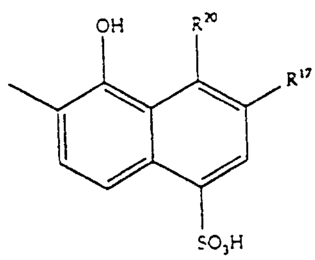

dans lequel
$R^{17}$ représente H ou $-SO_3H$ et
$R^{20}$ représente -OH ou $-NH_2$.

**3.** Pellicules ou feuilles polarisant la lumière, contenant un polymère organique et un ou plusieurs colorants selon les revendications 1 ou 2.

**4.** Pellicules ou feuilles polarisant la lumière selon la revendication 3, contenant un homo- ou copolymère de l'alcool vinylique.

**5.** Pellicules ou feuilles polarisant la lumière selon une ou plusieurs des revendications 3 ou 4, contenant 0,01 à 10 % de leur poids d'un colorant selon les revendications 1 ou 2.